# EUROPEAN PATENT APPLICATION

(11) **EP 4 811 915 A1**
(43) Date of publication of application: **23.09.2026**
(21) Application number: 23958649.8
(22) Date of filing: 17.11.2023
(51) Int. Cl.: H04W 74/00

(54) **METHOD AND APPARATUS IN NODE FOR WIRELESS COMMUNICATION**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/132422
(87) International publication number: WO 2025/102376

(57) **Abstract**

Disclosed are methods and devices in a node for wireless communication, which helps to determine uplink timing in a PRACH transmission including multiple preamble repetitions. The method includes: transmitting at least one target preamble repetition on a first RACH occasion (RO) set, where the at least one target preamble repetition is at least one preamble repetition in a first physical random access channel (PRACH) transmission, and the first PRACH transmission includes a plurality of preamble repetitions; and receiving a first timing advance command (TAC) on a first slot, where the first TAC is used for determining a first uplink timing adjustment, and the first uplink timing adjustment is applied to a start of a second slot, where the first RO set includes a plurality of PRACH occasions, the plurality of PRACH occasions are used for transmitting the at least one target preamble repetition, and the first slot and the plurality of PRACH occasions are jointly used for determining the second slot.

## Description

### TECHNICAL FIELD

The present disclosure relates to the field of communication technologies, and in particular, to methods and devices in a node for wireless communication.

### BACKGROUND

In order to enhance the coverage performance of random access, some communication systems (e.g., the new radio (NR) system) plan to introduce multiple physical random access channel (PRACH) transmissions, which refers to repeated transmission of multiple PRACH preambles (preamble repetitions). In multiple PRACH transmissions, multiple random access channel occasions (ROs) occupied by the multiple PRACH preambles may span a relatively long time in the time domain. Within this time span, a timing advance command (TAC) received by a node may result in different timing advances corresponding to the multiple PRACH preambles. Furthermore, when multiple PRACH transmissions conflicts with other uplink transmissions, it may be necessary to abandon (drop) the transmission of some PRACH preambles. Therefore, there is an urgent need to solve the problem of how to perform uplink timing adjustment in multiple PRACH transmissions.

### SUMMARY

Embodiments of the present disclosure provide methods and devices in a node for wireless communication. Aspects involved in the present disclosure are described below.

In a first aspect, some embodiments of the present disclosure provide a method in a first node for wireless communication. The method includes: transmitting at least one target preamble repetition on a first RO set, where the at least one target preamble repetition is at least one preamble repetition in a first physical random access channel (PRACH) transmission, the first PRACH transmission includes a plurality of preamble repetitions; and receiving a first timing advance command (TAC) on a first slot, where the first TAC is used for determining a first uplink timing adjustment, and the first uplink timing adjustment is applied to a start of a second slot; where the first RO set includes a plurality of PRACH occasions, the plurality of PRACH occasions are used for transmitting the at least one target preamble repetition, and the first slot and the plurality of PRACH occasions are jointly used for determining the second slot.

In a second aspect, some embodiments of the present disclosure provide a method in a second node for wireless communication. The method includes: receiving at least one target preamble repetition on a first RO set, where the at least one target preamble repetition is at least one preamble repetition in a first physical random access channel (PRACH) transmission, and the first PRACH transmission includes a plurality of preamble repetitions; and transmitting a first timing advance command (TAC) on a first slot, where the first TAC is used for determining a first uplink timing adjustment, and the first uplink timing adjustment is applied to a start of a second slot; where the first RO set includes a plurality of PRACH occasions, the plurality of PRACH occasions are used for transmitting the at least one target preamble repetition, and the first slot and the plurality of PRACH occasions are jointly used for determining the second slot.

In a third aspect, some embodiments of the present disclosure provide a first node for wireless communication, including: a first transmitter, configured to transmit at least one target preamble repetition on a first RO set, where the at least one target preamble repetition is at least one preamble repetition in a first physical random access channel (PRACH) transmission, and the first PRACH transmission includes a plurality of preamble repetitions; and a first receiver, configured to receive a first timing advance command (TAC) on a first slot, where the first TAC is used for determining a first uplink timing adjustment, and the first uplink timing adjustment is applied to a start of a second slot; where the first RO set includes a plurality of PRACH occasions, the plurality of PRACH occasions are used for transmitting the at least one target preamble repetition, and the first slot and the plurality of PRACH occasions are jointly used for determining the second slot.

In a fourth aspect, some embodiments of the present disclosure provide a second node for wireless communication, including: a second receiver, configured to receive at least one target preamble repetition on a first RO set, where the at least one target preamble repetition is at least one preamble repetition in a first physical random access channel (PRACH) transmission, and the first PRACH transmission includes a plurality of preamble repetitions; and a second transmitter, configured to transmit a first timing advance command (TAC) on a first slot, where the first TAC is used for determining a first uplink timing adjustment, and the first uplink timing adjustment is applied to a start of a second slot; where the first RO set includes a plurality of PRACH occasions, the plurality of PRACH occasions are used for transmitting the at least one target preamble repetition, and the first slot and the plurality of PRACH occasions are jointly used for determining the second slot.

In a fifth aspect, some embodiments of the present disclosure provide a first node for wireless communication, including a transceiver, a memory, and a processor. The memory is configured to store a program. The processor is configured to call the program in the memory and control the transceiver to receive or send a signal to cause the first node to implement the method as described in the first aspect.

In a sixth aspect, some embodiments of the present disclosure provide a second node for wireless communication, including a transceiver, a memory, and a processor. The memory is configured to store a program, and the processor is configured to call the program in the memory and control the transceiver to receive or send a signal to cause the second node to implement the method as described in the second aspect.

In a seventh aspect, some embodiments of the present disclosure further provide a communication system, including the foregoing first node and/or the second node. In another possible implementation, the system may further include other devices that interact with the first or second node in the solutions provided in the embodiments of the present disclosure.

In an eighth aspect, some embodiments of the present disclosure further provide a computer-readable storage medium having stored thereon a program, and the program causes a computer to implement part or all of the operations of the methods as described in the above aspects.

In a ninth aspect, some embodiments of the present disclosure further provide a computer program product including a non-transitory computer-readable storage medium storing a computer program, where the program is operable to cause a computer to implement part or all of the operations of the methods as described in the above aspects. In some implementations, the computer program product may be a software installation package.

In a tenth aspect, some embodiments of the present disclosure provide a chip, including a memory and a processor. The processor may call and run a computer program from the memory to implement part or all of the operations of the methods as described in the above aspects.

In some embodiments of the present disclosure, the first node transmits, via a plurality of PRACH occasions in the first RO set, at least one target preamble repetition in the first PRACH transmission. Upon receiving a first TAC associated with the first uplink timing adjustment, the first node may determine a second slot for uplink transmission based on the first slot in which the first TAC is received and the plurality of PRACH occasions. It can be seen that the first node can effectively determine the transmission timing adjustment of a plurality of preamble repetitions in a PRACH transmission with a plurality of preamble repetitions. That is, the first node can determine the transmission timing adjustment for the uplink transmission of a PRACH transmission with a plurality of preamble repetitions.

In some embodiments of the present disclosure, within the time span of the first PRACH transmission with a plurality of preamble repetitions, if the received first TAC takes effect, the second slot can be determined according to the number of actually transmitted preamble repetitions. The second slot can be used for uplink transmission; therefore, the first node can effectively balance between the resource utilization efficiency and the accuracy of timing adjustment.

In some embodiments of the present disclosure, at least one target preamble repetition sent by the first node through the first RO set is a preamble repetition in the first PRACH transmission. The first PRACH transmission may include a plurality of preamble repetitions. It can be seen that the first node can effectively perform transmission of a plurality of preamble repetitions in a PRACH transmission with a plurality of preamble repetitions.

In some embodiments of the present disclosure, the uplink timing of at least one target preamble repetition transmitted by the first node is the same, which not only helps to improve the performance gain of multiple PRACH transmissions and extend the coverage, but also helps to reduce random access delay and improve the utilization efficiency of the random access resource.

### BRIEF DESCRIPTION OF THE DRAWINGS

FIG. 1 is a schematic diagram of a system architecture of a wireless communication system according to some embodiments of the present disclosure.
FIG. 2 is a comparison diagram of PRACH occasion sets with different time spans.
FIG. 3 is a schematic diagram illustrating one scenario of transmission timing change in a PRACH transmission with multiple preamble repetitions.
FIG. 4 is a schematic diagram illustrating another scenario of transmission timing change in a PRACH transmission with multiple preamble repetitions.
FIG. 5 is a schematic diagram illustrating a conflict between a PRACH transmission with multiple preamble repetitions and other uplink transmissions.
FIG. 6 is a schematic flow chart of a method in a first node for wireless communication according to some embodiments of the present disclosure.
FIG. 7 is a schematic diagram of several preamble formats that may correspond to at least one preamble repetition in the method of FIG. 6.
FIG. 8 is a schematic diagram of one possible implementation of the method shown in FIG. 6.
FIG. 9 is a schematic diagram of another possible implementation of the method shown in FIG. 6.
FIG. 10 is a schematic diagram of yet another possible implementation of the method shown in FIG. 6.
FIG. 11 is a flow diagram of a possible implementation for determining the second slot based on the number of preamble repetitions.
FIG. 12 is a schematic flow chart of another possible implementation of the method shown in FIG. 6.
FIG. 13 is a schematic block diagram of a first node for wireless communication according to some embodiments of the present disclosure.
FIG. 14 is a schematic block diagram of a second node for wireless communication according to some embodiments of the present disclosure.
FIG. 15 is a schematic diagram of a device according to some embodiments of the present disclosure.
FIG. 16 is a schematic diagram of a hardware module of a communication device according to some embodiments of the present disclosure.

### DETAILED DESCRIPTION OF THE EMBODIMENTS

### Communication System Architecture

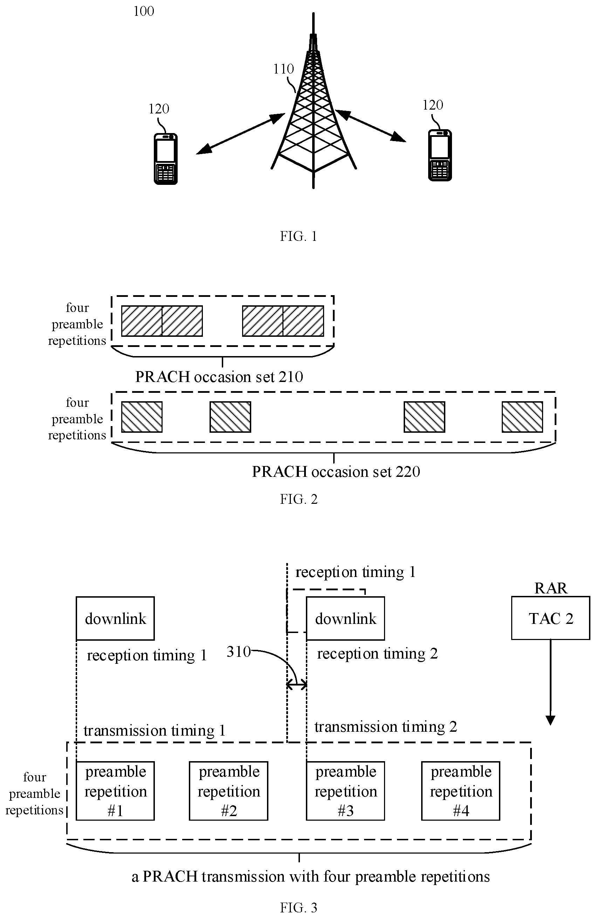

FIG. 1 is a schematic diagram of a system architecture of a wireless communication system 100 according to some embodiments of the present disclosure. The wireless communication system 100 may include a network device 110 and user equipment (UE) 120. The network device 110 may be a device in communication with the user equipment 120. The network device 110 may provide communication coverage for a specific geographic area and communicate with the user equipment 120 located within that coverage area.

FIG. 1 schematically illustrates one network device and two user equipments (UEs), and optionally, the wireless communication system 100 may include multiple network devices, with other numbers of user equipment within the coverage of each network device; the embodiments of the present disclosure are not limited thereto.

Optionally, the wireless communication system 100 may further include other network entities such as a network controller, a mobility management entity, and the embodiments of the present disclosure are not limited to this.

It should be understood that the technical solution of the embodiments of the present disclosure may be applied to various communication systems, for example: the fifth generation (5G) system or new radio (NR) system, long term evolution (LTE) system, LTE frequency division duplex (FDD) system, LTE time division duplex (TDD) system, and so on. The technical solutions provided by the present disclosure may also be applied to future communication systems, such as the sixth generation mobile communication system, satellite communication system, and so on.

The user equipment in the embodiments of the present disclosure may also be referred to as a terminal equipment, access terminal, user unit, user station, mobile station (MS), mobile terminal (MT), remote station, remote terminal, mobile device, user terminal, terminal, wireless communication device, user agent, or user device. The user equipment in the embodiments of the present disclosure may be a device that provides voice and/or data connectivity to users, and may be used to connect people, objects, and machines, such as handheld devices with wireless connection functions, vehicle-mounted devices and the like. Examples of the user equipment in the embodiments of the present disclosure include a mobile phone, a tablet computer (Pad), a notebook computer, a palmtop computer, a mobile internet device (MID), wearable devices, virtual reality (VR) devices, augmented reality (AR) devices, wireless terminals in industrial control, wireless terminals in self driving, wireless terminals in remote medical surgery, wireless terminals in smart grids, wireless terminals in transportation safety, wireless terminals in smart cities, and wireless terminals in smart homes. Optionally, the UE may act as a base station. For example, in scenarios such as vehicle-to-everything (V2X) or device-to-device (D2D), the UE may act as a scheduling entity that provides sidelink signals between UEs. For instance, a cellular telephone and a vehicle may communicate with each other using sidelink signals, or a cellular telephone may communicate with a smart home device without relaying communication signals through a base station.

The network device in the embodiments of the present disclosure may be a device for communicating with a user equipment, and the network device may also be referred to as an access network device or a wireless access network device, such as a base station. The network device in the embodiments of the present disclosure may be a radio access network (RAN) node (or a device) that enables terminal devices to access a wireless network. A base station may be broadly referred to by or replaced with various names, such as: Node B (NodeB), evolved Node B (eNB), next generation Node B (gNB), relay station, access point, transmitting and receiving point (TRP), transmitting point (TP), master eNB (MeNB), secondary eNB (SeNB), multi-standard radio (MSR) node, home base station, network controller, access node, wireless node, access point (AP), transmission node, transceiver node, baseband unit (BBU), remote radio unit (RRU), active antenna unit (AAU), remote radio head (RRH), central unit (CU), distributed unit (DU), positioning node and so on. A base station may be a macro base station, micro base station, relay node, donor node or the like, or a combination thereof. The base station may also refer to a communication module, modem, or chip disposed in the aforementioned apparatus or device. Additionally, the base station may also be a mobile switching center, a device bearing base station functions in a device-to-device (D2D), vehicle-to-everything (V2X), or machine-to-machine (M2M) communication, a network-side device in a 6G network, a device bearing base station functions in future communication systems, and so on. A base station may support networks with the same or different access technologies. The embodiments of the present disclosure do not limit the specific technology or specific device form adopted by the network device.

A base station may be fixed or mobile. For example, a helicopter or unmanned aerial vehicle may be configured to act as a mobile base station, with one or more cells movable according to the location of the mobile base station. In other examples, a helicopter or unmanned aerial vehicle may be configured to act as a device communicating with another base station.

In some deployments, the network device in the embodiments of the present disclosure may refer to a CU or a DU, or may include a CU and a DU. A gNB may also include an AAU.

Network devices and terminal devices may be deployed on land (including indoor or outdoor, handheld or vehicle-mounted, on water, or airborne aircraft, balloons, or satellites). The embodiments of the present disclosure do not limit the scenarios where network devices and terminal devices are deployed.

It should be understood that all or part of the functions of the communication device in the present disclosure may also be implemented by software functions running on hardware, or by virtualized functions instantiated on a platform (e.g., a cloud platform).

It should be understood that the explanation of terms in the embodiments of the present disclosure may refer to the 3rd Generation Partnership Project (3GPP) specifications, e.g., the TS36 series, TS37 series, and TS38 series, and may also refer to the specifications of the Institute of Electrical and Electronics Engineers (IEEE).

### Coverage Enhancement of PRACH Transmission

The coverage performance of a communication system (e.g., an NR system) is an important factor for operators to consider during commercial deployment of the communication networks. This is because the coverage performance of the communication system directly affects the service quality of the communication system and the cost of the operator, such as capital expenditure (CAPEX) and operating expense (OPEX).

The coverage performance of the communication system varies with the frequency band in which it operates. For example, compared with LTE systems, NR systems may operate in a higher frequency band (e.g., millimeter wave bands), resulting in greater path loss when operating in such bands; thus, NR systems have relatively poor coverage performance at high frequency bands. Therefore, as the communication systems support increasingly higher frequency bands, how to enhance their coverage has become a critical issue to address.

In most practical deployment scenarios, since user equipment has weaker capabilities compared to network equipment, the coverage performance of the uplink (UL) is a bottleneck for coverage enhancement of the communication system. With the development of communication technologies, uplink services in some emerging vertical use cases are gradually increasing (e.g., video uploading services). In scenarios with a large volume of uplink services, how to enhance uplink coverage remains an issue to be addressed.

In the related technologies, coverage enhancement solutions already exist for certain uplink channels. For example, NR Release 17 (Rel-17) has introduced coverage enhancement schemes for the Physical Uplink Shared Channel (PUSCH), Physical Uplink Control Channel (PUCCH), and Message 3 (Msg3) in the random access process.

However, Rel-17 does not provide a coverage enhancement scheme for PRACH, yet PRACH transmission performance is crucial for many procedures, such as initial access and beam failure recovery; thus, enhancing PRACH coverage is also highly important. Based on this, 3GPP approved Proposal RP-221858, formally establishing a work item (WI) entitled "Further NR Coverage Enhancements" in NR Rel-18, where enhancing PRACH transmission coverage performance is one of the key topics of this work item.

In some embodiments, multiple PRACH transmissions (i.e., PRACH transmissions with multiple repetitions) may be used to enhance PRACH coverage. Specifically, performance gains for PRACH transmission may be achieved through PRACH preamble repetitions (e.g., transmitting multiple preambles over multiple ROs, respectively). For example, to improve PRACH transmission coverage performance, a PRACH transmission with multiple preamble repetitions will be introduced in NR Release 18 (Rel-18).

As a possible implementation, the UE may transmit multiple preamble repetitions using the same beam. For example, in this technical feature, the UE may transmit, over multiple resources, a PRACH format for multiple preamble repetitions using the same transmit spatial filter (Tx spatial filter), i.e., the same transmit beam.

As a possible implementation, for a PRACH transmission with multiple preamble repetitions, a PRACH occasion set is associated with the same Synchronization Signal/Physical Broadcast Channel Block index (SS/PBCH block index, SSB index). The PRACH occasion set includes multiple valid PRACH occasions and may also be referred to as an RO (RACH occasion) set. The multiple valid ROs in the set are time-continuous and use the same frequency resources in the frequency domain. The number of valid ROs in the set is configured by a higher layer and may be 2, 4, or 8.

As a possible implementation, the PRACH occasion set is configured or determined within a time period X, and the configured or determined PRACH occasion set repeats in units of the time period X. The time period X includes K SSB-to-RO association pattern periods.

Further, if one or more preamble repetitions in a PRACH transmission with multiple preamble repetitions are dropped due to resource collision, the dropped preamble repetitions are no longer transmitted in a delay manner. For example, if the resources of the PRACH occasion set are network-configured, the UE may give up transmitting some or all preamble repetitions when the PRACH transmission conflicts with other uplink transmissions.

In some embodiments, for a PRACH transmission with multiple preamble repetitions, some PRACH occasion sets may have a large time span, even up to the order of 10 milliseconds (ms). For example, when configuring the PRACH occasion set, factors such as resource configuration of PRACH occasions, RO validity requirements, and association constraints with SSB indices may result in a large time gap between multiple ROs within the PRACH occasion set.

For ease of understanding, the time spans of different PRACH occasion sets are illustrated below with reference to FIG. 2. FIG. 2 shows two PRACH occasion sets, namely PRACH occasion set 210 and PRACH occasion set 220.

Referring to FIG. 2, each of the two PRACH occasion sets includes four preamble repetitions. By comparing the two PRACH occasion sets, it can be seen that the time-domain positions of four preamble repetitions in PRACH occasion set 210 are relatively close, while the time span of the four preamble repetitions in PRACH occasion set 220 is relatively long (i.e., the time span is too long).

When the time span of a PRACH occasion set is very long (e.g., PRACH occasion set 220 in FIG. 2), the propagation delay of the UE within this time span is likely to change. For example, for a moving UE, when the time span of the PRACH occasion set is longer, the propagation delay may change significantly as the UE moves.

Due to the change in the propagation delay, the timing advance (TA) of the uplink transmission of the UE may need to be adjusted. The uplink transmission may include preamble repetitions in PRACH transmission.

### Uplink Timing

In a communication system, a UE may adjust an uplink timing of uplink transmission after receiving a TAC or a downlink transmission. For example, in an NR system, if a downlink timing received by a UE changes, the UE may adjust a timing advance for uplink transmission. Similarly, if a UE receives a TAC for a timing advance group (TAG), the UE may adjust the timing advance for uplink transmission based on the TAC.

As mentioned above, the uplink timing for the UE to transmit preamble repetitions is also affected by propagation delay. If the UE receives a new TAC or a downlink transmission with changed downlink timing within the time span of a PRACH occasion set, the transmission timings of multiple preamble repetitions transmitted in that the PRACH occasion set may differ.

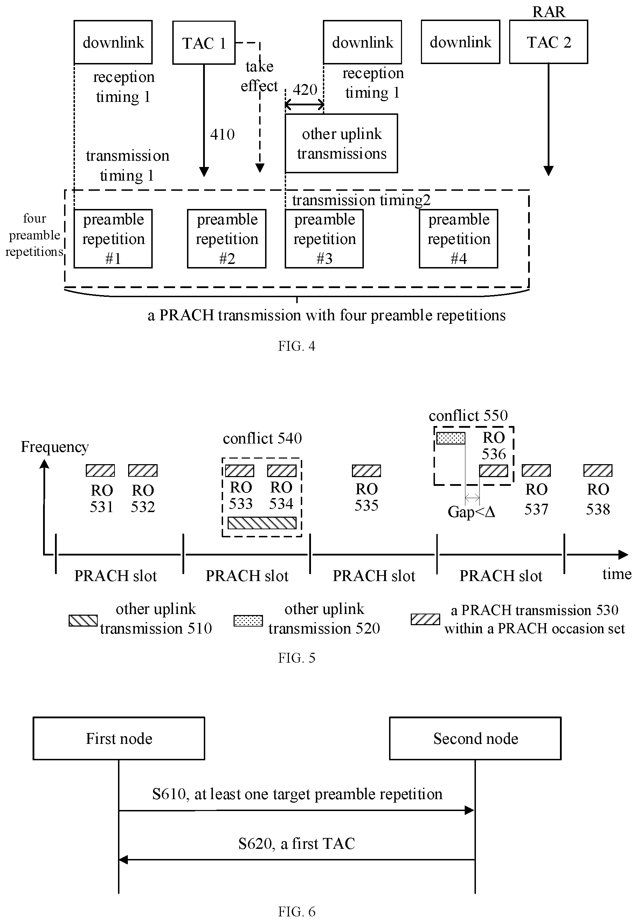

For ease of understanding, two scenarios of uplink transmission timing changes are illustrated below by taking a PRACH transmission with four preamble repetitions as an example, in conjunction with FIGS. 3 and 4. The four preamble repetitions in the PRACH transmission shown in FIGS. 3 and 4 are preamble repetition #1 to preamble repetition #4, respectively. In FIG. 3, the transmission timing (tx timing) of the preamble repetitions changes due to a change in the reception timing (rx timing) of the downlink transmission. In FIG. 4, the transmission timing of the preamble repetitions changes due to the reception of a TAC.

In FIGS. 3 and 4, without TAC or downlink influence, the transmission timings of the four preamble repetitions may all be determined based on the same downlink (DL) reception timing. For example, transmission timing 1 of each of preamble repetition #1 to preamble repetition #4 is the same as downlink reception timing 1.

However, the reception timing of the downlink transmission may change. Time period 310 in FIG. 3 represents a time offset between an original downlink timing and an actual downlink timing. Due to this time offset, the downlink timing at which the UE receives the downlink transmission changes from reception timing 1 to reception timing 2. As shown in FIG. 3, time period 310 affects the transmission timing of preamble repetition #3, causing the uplink timing of preamble repetition #3 to change from transmission timing 1 to transmission timing 2. It can be seen that in this PRACH transmission, at least the transmission timings of preamble repetition #1 and preamble repetition #3 are different.

In contrast to FIG. 3, the UE in FIG. 4 receives a valid TAC1 during PRACH transmission. Information 410 indicated by TAC1 may include a new TA or an offset value of TA. Information 410 may be used for determining the time offset between the UE's transmission timing and downlink reception timing, i.e., time period 420. When information 410 indicates a new TA, time period 420 is equal to the new TA. When information 410 indicates an offset value of TA, time period 420 is the sum of the original TA and the offset value.

As can be seen from FIG. 4, preamble repetitions #3 and #4 transmitted by the UE occur after TAC1 takes effect; thus, the transmission timings of these two preamble repetitions are no longer transmission timing 1 of preamble repetition #1. As shown in FIG. 4, under the influence of time period 420, the uplink timing of preamble repetition #3 changes from transmission timing 1 to transmission timing 2. It can be seen that in this PRACH transmission, the transmission timings of at least preamble repetition #1 and preamble repetition #3 are no longer the same.

Two scenarios where transmission timings of multiple preamble repetitions differ in PRACH transmission have been described above with reference to FIGS. 3 and 4. In related technologies, when a UE transmits preamble repetitions to a base station (e.g., eNB/gNB) via PRACH transmission, the base station may detect the preamble repetitions and send a random access response (RAR). For example, this RAR may be the RAR shown in FIGS. 3 and 4. Typically, the RAR includes a TAC (e.g., TAC2 in FIGS. 3 and 4). The TAC is used for indicating the timing advance amount required for uplink transmission to the UE.

However, when the transmission timings of multiple preamble repetitions in one PRACH transmission differ, the detection of the preamble repetitions by the base station, the transmission of the RAR, and the timing adjustment of the UE may be affected.

For example, in this scenario, when a base station (gNB/eNB) detects multiple preamble repetitions, there is no unified reception timing, and combined detection of these preamble repetitions may cause interference issues.

For example, in this scenario, even if the base station may detect a timing advance and send an RAR containing a TAC to the UE, without special indication, the UE cannot confirm which preamble repetition the TAC based for the detected timing advance, thus failing to perform effective timing adjustment.

Further, if the preamble repetition transmitted on a fixed RO is used as a reference for timing adjustment, the base station cannot calculate the timing advance based on the preamble repetition on the RO when the preamble repetition on the RO is dropped or not detected by the base station.

In conclusion, PRACH transmissions with multiple preamble repetitions can enhance the coverage of an NR system. However, for such PRACH transmissions, determining the timing advance for uplink transmission remains a technical challenge to address. In particular, when the transmission timings of multiple preamble repetitions in such transmissions differ, determining the transmission timing for uplink transmission becomes an urgent technical issue requiring resolution.

Furthermore, to avoid inconsistent transmission timings of multiple preamble repetitions caused by a TAC, when a TAC is received within the time span of a PRACH transmission with multiple preamble repetitions, how to determine the uplink transmission timing and the transmission timing of a preamble repetition are both technical challenges to be addressed.

In addition, since a PRACH occasion set occupied by a PRACH transmission with multiple preamble repetitions may have a large time span, the probability of such PRACH transmissions conflicting with other uplink transmissions is significantly increased. Further, a PRACH transmission with multiple preamble repetitions may conflict with multiple other uplink transmissions. As mentioned above, when such a PRACH transmission conflicts with other uplink transmissions, the UE has to abandon the transmission of all or part of the preamble repetitions, as shown in FIG. 5.

FIG. 5 is an example of a conflict between a PRACH transmission and other uplink transmissions (other UL tx). Three types of uplink transmissions exist on the time-frequency resources shown in FIG. 5: other uplink transmission 510, other uplink transmission 520, and PRACH transmission 530 within a PRACH occasion set.

As can be seen from FIG. 5, PRACH transmission 530 transmits preamble repetitions via 8 ROs in the PRACH occasion set. The 8 ROs are RO531, RO532, ..., RO538, respectively. The time-domain resources of PRACH transmission 530 are configured in units of PRACH slots. For example, the first PRACH slot in FIG. 5 includes two ROs.

Referring to FIG. 5, the transmission of preamble repetitions on RO533 and RO534 conflicts with other uplink transmission 510 (conflict 540). Specifically, in conflict 540, the PRACH transmission and other uplink transmission 510 occupy the same time-domain resources. In this scenario, the UE may have to abandon (drop) transmitting preamble repetitions on RO533 and RO534.

Conflict 550 in FIG. 5 occurs because the time interval (gap) between RO536 and other uplink transmission 520 is small. As shown in FIG. 5, the time interval between the end time of other uplink transmission 520 and the start time of RO536 is less than a certain parameter (i.e., Gap < Δ). In this case, the UE may have to abandon transmitting the preamble repetition on RO536.

In cases where some preamble repetitions are dropped, if the number of actually transmitted preamble repetitions is not taken into account, it may lead to severe system resource consumption and increased UE access delay. Therefore, for a PRACH transmission with multiple preamble repetitions, how to reasonably determine the timing advance for uplink transmission based on the number of actually transmitted preamble repetitions is a technical problem to be solved.

Furthermore, since some preamble repetitions are dropped, or the base station fails to receive all actually transmitted preamble repetitions, how to indicate which preamble repetition the TAC in the RAR references is another technical problem to be solved.

It should be noted that the uplink timing issues mentioned above-including uplink timing changes caused by TACs and uplink timing issues due to uplink transmission conflicts within the time span of a PRACH transmission with multiple preamble repetitions-are merely examples. Embodiments of the present disclosure are applicable to any scenario where multiple preamble repetitions in a PRACH transmission have inconsistent transmission timings or transmission failures.

Based on this, embodiments of the present disclosure provide a method and device for a node for wireless communication. In this method, when a first node (e.g., a UE) transmits at least one target preamble repetition within a time span of a first PRACH transmission, if a TAC is received and an original effective time of the TAC falls within this time span, a second slot for uplink transmission may be determined based on the number of target preamble repetitions and the plurality of PRACH occasions within the time span. With this method, even if the first node receives an effective TAC within the time span of the first PRACH transmission, it can ensure that the uplink timings of multiple preamble repetitions are the same, thereby improving random access efficiency.

In some embodiments, the PRACH transmission with multiple preamble repetitions mentioned in the embodiments of the present disclosure may refer to multiple PRACH transmissions using the same beam, to obtain a signal-to-noise ratio gain by repeatedly transmitting PRACH on the same beam. In other embodiments, the multiple PRACH transmissions referred to herein may be multiple PRACH transmissions using different beams, to obtain diversity gain by repeatedly transmitting PRACH on different beams.

It should be noted that the term "beam" in the present disclosure may include or be replaced by at least one of the following: physical beam, logical beam, spatial filter, spatial parameter, spatial domain filter, spatial domain transmission filter, spatial domain reception filter, and antenna port.

The embodiments of the present disclosure may be applied to an initial access process or a beam failure recovery process. Taking the initial access procedure as an example, the embodiments of the present disclosure may be applied to a four-step random access process (i.e., random access process type-1), or a two-step random access process (i.e., random access process type-2), and the embodiments of the present disclosure are not limited to this.

The embodiments of the method of the present disclosure are described in detail below with reference to the accompanying drawings. FIG. 6 is a schematic flow chart of a method in a first node for wireless communication according to some embodiments of the present disclosure. The method shown in FIG. 6 is described from the perspective of interaction between the first node and the second node.

In some embodiments, the first node may be a network-controlled repeater (NCR).

In some embodiments, the first node may be a user equipment, for example, the user equipment 120 shown in FIG. 1.

In some embodiments, the first node may be a relay, such as a relay terminal.

In some embodiments, the second node may be a network device, for example, the network device 110 shown in FIG. 1.

In some embodiments, the second node may be a base station (gNB/eNB).

In some embodiments, the second node may be a cell.

The method shown in FIG. 6 includes operations S610 and S620, which are described below.

In S610, the first node transmits at least one target preamble repetition to the second node, where the at least one target preamble repetition is at least one preamble repetition in the first PRACH transmission. As mentioned above, PRACH denotes a physical random access channel, and the first PRACH transmission is a first physical random access channel transmission.

The first node may send preamble repetitions in a random access process (also referred to as a random access process) or in beam management or other PRACH transmissions, which is not limited herein.

In some embodiments, the preamble repetition sent by the first node may be a random access preamble sent by the first node in the current random access process. The random access process may involve one or more RACH attempts by the first node based on multiple PRACH transmissions.

In some embodiments, the preamble repetition sent by the first node may be replaced with one of a preamble, a PRACH preamble, a random access preamble, or a preamble format.

In some embodiments, the target preamble repetition may be replaced with one of a target preamble, a target PRACH preamble, a target random access preamble, or a target preamble format.

In some embodiments, a first node may perform a first PRACH transmission by transmitting at least one target preamble repetition. Exemplarily, the first node transmitting at least one target preamble repetition may alternatively be referred to as the first node performing the first PRACH transmission. Exemplarily, the first node transmitting at least one target preamble repetition may indicate that the first node performs multiple PRACH transmissions in one RACH attempt.

In some embodiments, the first PRACH transmission may be a PRACH transmission with multiple preamble repetitions, i.e., the first PRACH transmission includes multiple preamble repetitions. For example, the first PRACH transmission may be any of the PRACH transmissions shown in FIGS. 2 to 5. When the first PRACH transmission is the PRACH transmission in FIG. 3 or FIG. 4, the first PRACH transmission includes four preamble repetitions. When the first PRACH transmission is the PRACH transmission in FIG. 5, the first PRACH transmission includes eight preamble repetitions.

In some embodiments, the first PRACH transmission carries the plurality of preamble repetitions.

In some embodiments, the target preamble repetition is a preamble repetition in a first PRACH transmission actually transmitted by the first node. When the first node performs a first PRACH transmission with multiple preamble repetitions, a preamble repetition actually transmitted through a PRACH occasion in the first RO set is a target preamble repetition. That is, the preamble repetition dropped in the first PRACH transmission does not belong to the target preamble repetitions.

In some embodiments, the target preamble repetition included in the first PRACH transmission may also be referred to as a target preamble repetition included in the at least one target preamble repetition. For example, "the first PRACH transmission including multiple target preamble repetitions" may be replaced by "the at least one target preamble repetition including multiple target preamble repetitions."

In some embodiments, any one of the at least one target preamble repetition is one of the plurality of preamble repetitions included in the first PRACH transmission.

In some embodiments, any one of the at least one target preamble repetition is a transmitted preamble repetition of the plurality of preamble repetitions included in the first PRACH transmission.

In some embodiments, the number of preamble repetitions in the at least one target preamble repetition is less than or equal to the number of preamble repetitions included in the first PRACH transmission.

In some embodiments, the first PRACH transmission includes the at least one target preamble repetition.

In some embodiments, the at least one target preamble repetition is at least one preamble repetition in a first PRACH transmission. Exemplarily, the first PRACH transmission includes M preamble repetitions, where the number of target preamble repetitions is less than or equal to M.

In some embodiments, the first PRACH transmission is configured with M preamble repetitions.

In some embodiments, M may be one of 2,4, or 8; alternatively, M may be any positive integer less than or equal to 8.

In some embodiments, one or more of the M preamble repetitions may be dropped.

In some embodiments, the first PRACH transmission is a multiple PRACH transmission, i.e., a PRACH transmission including M preamble repetitions.

In some embodiments, the at least one target preamble repetition transmitted by the first node may be any one or more of the four preamble repetitions in FIGS. 2 to 4.

In some embodiments, a preamble repetition other than the at least one target preamble repetition in the first PRACH transmission is dropped due to an uplink resource collision.

Exemplarily, when multiple uplink transmissions conflict, the first node may drop one or more PRACH preamble repetitions in the first PRACH transmission according to a transmission priority rule, with the remaining preamble repetitions being target preamble repetitions.

In some embodiments, when a transmission priority of the preamble repetition is higher than a transmission priority of the conflicting uplink transmission, the preamble repetition may serve as a target preamble repetition.

In some embodiments, when a transmission priority of the preamble repetition is equal to or lower than a transmission priority of the conflicting uplink transmission, the first node may drop the preamble repetition.

In some embodiments, the uplink transmission that is in resource conflict with the preamble repetition is, for example, at least one of a PUSCH, a PUCCH, or a sounding reference signal (SRS). In actual communication, there are multiple scenarios that may cause uplink transmission conflicts. For example, a dual connectivity scenario may result in exceeded power allocation limits; some slot format determinations may also cause multiple uplink transmissions to conflict; an uplink transmission conflict may also occur when the transmission occasion of the PUSCH, PUCCH, PRACH, or SRS is in the same slot (e.g., conflict 540 in FIG. 5); or when the interval between PRACH transmission and the transmission of PUSCH, PUCCH, or SRS is too small (e.g., conflict 550 in FIG. 5).

The first node sends at least one target preamble repetition on the first RO set. As can be seen from the above, the RO may represent a random access channel occasion, and the first RO set refers to the first random access channel occasion set.

In some embodiments of the present disclosure, the RO set may include or be replaced by at least one of the following: a random access channel occasion group (ROG), a physical random access channel occasion group (PRACH occasion group), a PRACH occasion set, or a PRACH transmission occasion group.

In some embodiments, the first RO set may be replaced by a first PRACH occasion group.

In some embodiments, the first RO set may be replaced by a first PRACH occasion set.

In some embodiments, the first RO set may be replaced by a first PRACH transmission occasion set.

The first node sending at least one target preamble repetition on the first RO set may mean that the time-domain resources corresponding to the first RO set are used for sending at least one target preamble repetition. For example, the UE performs the first PRACH transmission on multiple ROs of the first RO set.

"The first node sends at least one target preamble repetition on the first RO set" may be replaced by "the first node performs the first PRACH transmission on the first RO set". That is, the first RO set is used for transmitting multiple preamble repetitions included in the first PRACH transmission.

In some embodiments, the first PRACH transmission corresponds to the first RO set.

The first RO set may include a plurality of PRACH occasions. As can be seen from the above, the plurality of PRACH occasions may represent multiple physical random access channel occasions. In the embodiments of the present disclosure, a PRACH occasion may include or be substituted with at least one of the following: RO or PRACH transmission occasion.

In some embodiments, the plurality of PRACH occasions may be replaced by multiple ROs.

In some embodiments, the plurality of PRACH occasions may be replaced by multiple PRACH transmission occasions.

In some embodiments, the plurality of PRACH occasions included in the first RO set are all valid. A PRACH occasion being valid means that the time-domain resource corresponding to the PRACH occasion may be used for PRACH transmission.

In some embodiments, any one of the plurality of PRACH occasions may be a slot, a symbol or consecutive symbols in a slot, or consecutive symbols in at least two adjacent slots, with no limitation thereto.

The plurality of PRACH occasions in the first RO set may be used for transmitting multiple preamble repetitions included in the first PRACH transmission. Exemplarily, the multiple preamble repetitions included in the first PRACH transmission are carried on the plurality of PRACH occasions, respectively.

In some embodiments, the plurality of preamble repetitions included in the first PRACH transmission are in one-to-one correspondence with the plurality of PRACH occasions in the first RO set.

In some embodiments, the plurality of PRACH occasions in the first RO set are respectively used for the plurality of preamble repetitions included in the first PRACH transmission.

In some embodiments, the number of PRACH occasions in the first RO set is pre-configured.

In some embodiments, the number of PRACH occasions in the first RO set is one of {2, 4, 8}.

In some embodiments, the first RO set may include N PRACH occasions, where N is one of {2, 4, 8}.

In some embodiments, N is determined by the first node. As an example, the first node may determine the value of N according to the priority of the service. When the priority of the service is higher, N may be 4 or 8.

In some embodiments, when the first PRACH transmission is configured to include M preamble repetitions, M is less than or equal to N.

In some embodiments, N PRACH occasions are orthogonal in the time-frequency domain.

In some embodiments, the N PRACH occasions are continuous in the time domain and use the same frequency domain resource.

The plurality of PRACH occasions in the first RO set may be used for transmitting at least one target preamble repetition. In some embodiments, at least one target preamble repetition sent by the first node is carried on at least one PRACH occasion in the first RO set, respectively.

In some embodiments, the at least one target preamble repetition is transmitted on at least one PRACH occasion of the plurality of PRACH occasions in the first RO set. For example, when the first node transmits Q target preamble repetitions (1≤Q≤N) on the first RO set, the Q target preamble repetitions may be transmitted through Q PRACH occasions in the first RO set, respectively.

In some embodiments, the number of target preamble repetitions is less than or equal to the number of PRACH occasions included in the first RO set.

In some embodiments, the number of target preamble repetitions is less than the number of PRACH occasions included in the first RO set.

In some embodiments, the number of target preamble repetitions is equal to the number of PRACH occasions included in the first RO set.

In some embodiments, the at least one target preamble repetition has a one-to-one correspondence with the at least one PRACH occasion in the first RO set.

In some embodiments, any one of the at least one target preamble repetition occupies one of the N PRACH occasions included in the first RO set.

In some embodiments, the PRACH occasions in the first RO set used for transmitting target preamble repetitions may also be referred to as candidate PRACH occasions. That is, the plurality of PRACH occasions include at least one candidate PRACH occasion.

In some embodiments, at least one candidate PRACH occasion in the first RO set is used for transmitting the at least one target preamble repetition.

In some embodiments, when the first PRACH transmission includes multiple target preamble repetitions, multiple candidate PRACH occasions among the plurality of PRACH occasions are used for transmitting the plurality of target preamble repetitions, respectively.

In some embodiments, the at least one target preamble repetition includes multiple target preamble repetitions, any one of which occupies one of the plurality of candidate PRACH occasions.

In some embodiments, the at least one target preamble repetition includes multiple target preamble repetitions, which are respectively transmitted on the multiple candidate PRACH occasions included in the first RO set.

In some embodiments, when the first PRACH transmission includes one target preamble repetition, one candidate PRACH occasion of the plurality of PRACH occasions is used for transmitting the target preamble repetition.

In some embodiments, at least one target preamble repetition transmitted by the first node or at least one preamble repetition in the first PRACH transmission may correspond to at least one preamble format. Exemplarily, when the at least one target preamble repetition transmitted by the first node includes multiple target preamble repetitions, the plurality of target preamble repetitions correspond to multiple different preamble formats, respectively.

In some embodiments, when at least one target preamble repetition sent by the first node includes multiple target preamble repetitions, the preamble formats corresponding to at least two of the multiple target preamble repetitions are different. For example, preamble repetition 1 among the plurality of target preamble repetitions employs a preamble format including multiple sequences, while preamble repetition 2 employs a preamble format including one sequence.

In some embodiments, any one of the at least one target preamble repetition corresponds to a preamble format.

In some embodiments, any one of the at least one target preamble repetition includes a preamble format.

In some embodiments, any one of the at least one target preamble repetition is a preamble format.

In some embodiments, the first PRACH transmission includes multiple preamble repetitions, and any two of the multiple preamble repetitions use the same preamble format.

In some embodiments, the first PRACH transmission includes multiple preamble repetitions, at least two of the multiple preamble repetitions use different preamble formats.

It should be noted that the preamble format corresponding to at least one target preamble repetition or any preamble repetition in the first PRACH transmission may be any existing preamble format, or any future preamble format, which is not limited herein.

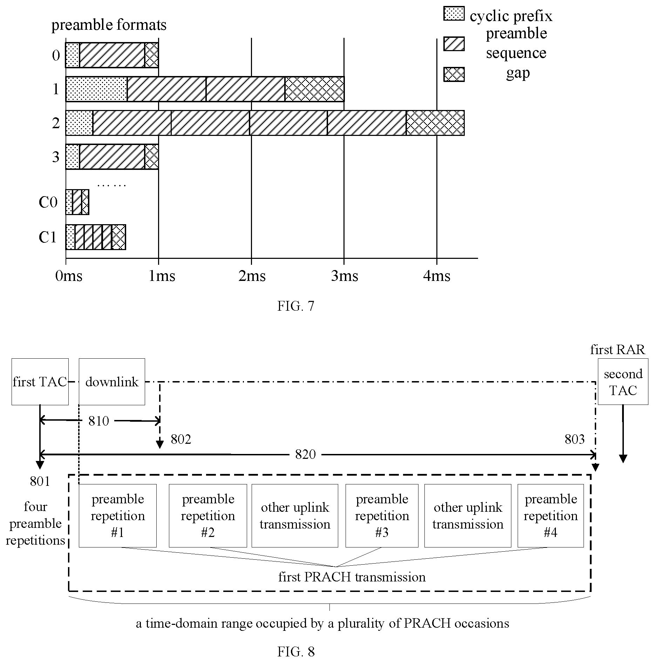

For ease of understanding, the preamble format corresponding to the preamble repetition transmitted by the first node is illustrated below, along with several other preamble formats in FIG. 7. FIG. 7 shows only some of the preamble formats for comparison. It should be understood that the preamble formats in FIG. 7 are merely examples and do not limit the plurality of preamble formats corresponding to the plurality of preamble repetitions transmitted by the first node.

The preamble formats shown in FIG. 7 include Format 0 to Format 3, as well as Format C0 and Format C1. As can be seen from FIG. 7, there are multiple other preamble formats between Format 3 and Format C0.

Referring to FIG. 7, a preamble format mainly includes a cyclic prefix (CP) at the front part, a preamble sequence (SEQ) in the middle, and a gap (GP) at the end. All preamble formats include one CP and n SEQs, while some may not include a GP.

As can be seen from FIG. 7, the number n of SEQs may be 1, such as in Format 0 and Format C0 in FIG. 7. The number n of SEQs may also be other integers greater than 1. For example, in FIG. 7, the value of n for Format 1 is 2, and the value of n for Format 2, Format 3, and Format C1 is 4. It should be understood that n may also be other values not shown in FIG. 7.

Referring to FIG. 7, different preamble formats have different time durations. For example, Format 0 and Format 3 have a time duration of 1 ms, Format 1 has a time duration of 3 ms, Format 2 has a time duration greater than 4 ms, and Format C0 and Format C1 have a time duration less than 1 ms. Since different preamble formats have different total time durations and different values of n, the time durations of CP, SEQ, and GP in different formats also differ.

In S610, the preamble format corresponding to any one of the at least one target preamble repetitions transmitted by the first node may be any one of those in FIG. 7 or other preamble formats.

Corresponding to the first node, the second node receives at least one target preamble repetition on the first RO set. The number of preamble repetitions received by the second node is less than or equal to the number of target preamble repetitions transmitted by the first node. In some embodiments, the second node may fail detect a certain target preamble repetition transmitted by the first node.

Exemplarily, the second node detects one or more target preamble repetitions over the plurality of PRACH occasions in the first RO set.

Referring to FIG. 6, in S620, the first node receives a first TAC. As mentioned earlier, TAC denotes a timing advance command, and the first TAC is the first timing advance command.

It should be noted that operations S610 and S620 in FIG. 6 are only examples, and the two operations may be performed in any order. That is, the first node may perform operations S610 and S620 according to multiple timing sequences, and there is no limitation here. For example, the first node may first receive the first TAC and then send at least one target preamble repetition. Alternatively, the first node may perform transmission of at least one target preamble repetition while receiving the first TAC.

In some embodiments, the first TAC includes a first TA or a first offset value. The first TA or the first offset value is used for determining a first uplink timing adjustment. For example, the first TAC may be TAC1 in FIG. 4.

In some embodiments, the first TAC includes a positive integer number of bits.

In some embodiments, the first TA differs from the TA used by the first node when performing the first PRACH transmission.

In some embodiments, the first offset value represents a time offset between the first TA and the original TA of the first node.

In some embodiments, the first TAC is used for determining the uplink transmission timing of the first node.

In some embodiments, the first TA or the first offset value is used for updating the current transmission timing.

In some embodiments, the original effective time of the first TAC is within the time span of the first PRACH transmission, so the first TAC may result in different transmission timings of multiple preamble repetitions of the first PRACH transmission. The time span of the first PRACH transmission is a continuous time period between the first PRACH occasion and the last PRACH occasion in the first RO set.

In some embodiments, the original effective time of the first TAC may be referred to as a first effective slot. After the first node receives the first TAC, the effective time determined based on the configuration information of the first TAC is the original effective time.

In some embodiments, the first effective slot may be a slot in which the effective time of the first TAC is located, or one or more slots associated with the effective time of the first TAC, with no limitation herein.

In some embodiments, the first effective slot is an uplink slot. The first effective slot may be used for uplink transmission.

In some embodiments, the first effective slot may be one or more slots, or may be a slot in which one or more consecutive symbols are located.

The first node receives the first TAC on the first slot. The first slot is a first uplink slot. For example, the first slot is an uplink slot n.

In some embodiments, the first slot is the last slot among one or more uplink slots overlapping with physical downlink shared channel (PDSCH) reception slots. That is, the first slot is a slot in which the uplink slot and the downlink slot overlap. In this slot, the first node can receive the first TAC sent by the second node.

In some embodiments, when the subcarrier interval changes, the uplink slot and the downlink slot overlap.

In some embodiments, since the uplink slot and the downlink slot are not completely aligned, the two slots overlap.

In some embodiments, the first slot is a downlink slot used by the first node to receive the first TAC.

In some embodiments, the first slot is one or more slots, or the first slot is a slot where multiple consecutive symbols are located. For example, the first slot is the slot in which the time-domain resources occupied by the first TAC are located. The time-domain resource occupied by the first TAC may be one or more consecutive slots, or one or more consecutive symbols.

In some embodiments, the first slot may be within the time span in which the first PRACH is transmitted or may be prior to the time span in which the first PRACH is transmitted. Exemplarily, the first slot may be any one or more slots between the first PRACH occasion and the last PRACH occasion in the first RO set, or any one or more slots before the first PRACH occasion.

In some embodiments, a first slot is used for determining a first effective slot. As an example, the first effective slot is the sum of the first slot and the first delay.

In some embodiments, the first effective slot is later than the first slot by the first delay.

In some embodiments, the first effective slot is multiple slots later than the first slot.

In some embodiments, the first effective slot is equal to the sum of the first slot and *k +* 1+2*^{µ}* · *K_{offset}*, where $k = \left⌈{N}_{slot}^{subframe , μ}⋅\left({N}_{T , 1}+{N}_{T , 2}+{N}_{TA , max}+0.5\right)/{T}_{sf}\right⌉$:
*N*_{T,1} is a time duration in msec of *N*₁ symbol corresponding to a PDSCH processing time for UE processing capability 1 when additional PDSCH dedicated demodulation reference signals (DM-RS) is configured);
*N*_{T,2} is a time duration in msec of *N*₂ symbols corresponding to a PUSCH preparation time for UE processing capability 1;
*N*_{TA,max} is the maximum timing advance value in msec that can be provided by a TA command field of 12 bits;
${N}_{slot}^{subframe , μ}$ is the number of slots per sub-frame;
*T*_{sf} is the subframe duration of 1 msec;
*K*_{offset} = *K*_{cell,offset} - *K*_{UE,offset}, where *K*_{cell,offset} are provided by *cellSpecificKoffset. K*_{UE,offset} is s provided by the Differential Koffset MAC CE (media access control control element) command; otherwise, if not specified separately, then *K*_{cell,offset} = 0 or *K*_{UE,offset} = 0;
*N*₁ and *N*₂ are determined with respect to the minimum subcarrier spacing (SCS) among the SCSs of all configured UL BWPs for all uplink carriers in the TAG and of all configured DL BWPs for the corresponding downlink carriers;
*µ* is related to SCS; when *µ* = 0, the UE assumes *N*_{1,0} = 14;
The first slot and ${N}_{slot}^{subframe , μ}$ are both determined with respect to the minimum SCS among the SCSs of all configured UL BWPs for all uplink carriers in the TAG;
*N*_{TA,max} is determined with respect to the minimum SCS among the SCSs of all configured UL BWPs for all uplink carriers in the TAG and for all configured initial UL BWPs provided by initial Uplink BWP.

In some embodiments, the first slot is an uplink slot n. The uplink slot n is the last slot among uplink slot(s) overlapping with the slot(s) of PDSCH reception assuming *T_{TA}* = 0, where the PDSCH provides the timing advance command and *T_{TA}* is defined in [4, TS 38.211].

In some embodiments, the first slot is an uplink slot n, and the first effective slot is equal *to n* + *k +* 1+2*^{µ}* · *K*_{offset}.

In some embodiments, for the method of determining the first effective slot, refer to TS 38.213.

In some embodiments, the first delay is equal to *k* + 1+2*^{µ}* · *K*_{offset}, where k, *µ*, *K*_{offset} have the same meaning as above.

In some embodiments, the first delay is determined according to the information in the first TAC.

In some embodiments, the first delay is configured by a higher layer.

In some embodiments, the first effective slot is within a time span in which the first PRACH transmission is located. That is, the first effective slot is within the time-domain range occupied by the plurality of PRACH occasions in the first RO set.

In some embodiments, the first effective slot is outside the time span in which the first PRACH transmission is located. That is, the first effective slot is outside the time-domain range occupied by the plurality of PRACH occasions in the first RO set.

In some embodiments, the time-domain range occupied by the plurality of PRACH occasions is a continuous time domain starting with the first PRACH occasion among the plurality of PRACH occasions and ending with the last PRACH occasion among the plurality of PRACH occasions.

In some embodiments, the first effective slot is not earlier than the start of the first PRACH occasion among the plurality of PRACH occasions, and the first effective slot is not later than the end of the last PRACH occasion among the plurality of PRACH occasions.

The first TAC is used for determining a first uplink timing adjustment. The first uplink timing adjustment is used for the first node to perform uplink transmission after the first TAC takes effect. Exemplarily, the first uplink timing adjustment is used for partial or complete uplink transmissions after the first TAC takes effect and before other uplink timing adjustments are applied.

In some embodiments, the first uplink timing adjustment may be related to the first TA or the first offset value.

In some embodiments, the difference between the first TA and the current TA (original TA) of the first node may be a first uplink timing adjustment. Or the first offset value may be the first uplink timing adjustment. For example, the first uplink timing adjustment is a time period 420 in FIG. 4.

In some embodiments, the first uplink timing adjustment is a change in the uplink timing relative to the current uplink timing, where the current uplink timing may be the uplink timing of the first node before the received first TAC takes effect. Exemplarily, the current uplink timing may be an uplink timing without corresponding adjustment by the first node based on the first uplink timing adjustment.

In some embodiments, the uplink timing determined based on the first uplink timing adjustment differs from the current uplink timing.

In some embodiments, the first uplink timing adjustment is used for uplink transmissions other than the RAR-scheduled PUSCH and the PUCCH carrying hybrid automatic repeat request acknowledgement (HARQ-ACK) for successful RAR transmission.

In some embodiments, the first uplink timing adjustment is used for uplink transmission after the first TAC takes effect, except for the PUSCH scheduled by the RAR and the PUCCH carrying HARQ-ACK for successful RAR transmission.

In some embodiments, a first uplink timing adjustment is applied to multiple uplink transmissions. As an embodiment, the first uplink timing adjustment is applied to at least one of SRS, PUSCH, or PUCCH.

In some embodiments, the first uplink timing adjustment is a *N*_{TA} value.

In some embodiments, the first uplink timing adjustment is indicated by *T_{TA}*, and the first TAC includes *T_{TA}*.

In some embodiments, the first uplink timing adjustment is applied from the first effective slot after the first node receives the first TAC in the first slot. For example, if the first effective slot is not adjusted, when the UE receives the first TAC on the uplink slot n, the adjustment of the uplink transmission timing may be applied from the start of the uplink slot *n* + *k* + 1+2*^{µ}* ·*K*_{offset}.

The first uplink timing adjustment is applied to the start of the second slot. The second slot may be an uplink slot determined by the first uplink timing adjustment. It can be seen that the second slot is an uplink slot for uplink transmission by the first node. In some embodiments, the second slot may be replaced by a second uplink slot.

In some embodiments, the second slot is the uplink slot where the first node starts applying the first uplink timing adjustment. Specifically, the second slot is the slot in which the first node initiates uplink transmission based on the first TA or offset value in the first TAC. The second slot may also be referred to as the actual effective time of the first TAC. In the embodiments of the present disclosure, the first node performs uplink transmission based on the second slot after receiving the first TAC. When the second slot differs from the first effective slot, the embodiments of the present disclosure adjust the original effective time of the first TAC.

In some embodiments, the second slot is one or more uplink slots, or the second slot is a slot in which one or more symbols are located.

In some embodiments, the second slot is used for transmitting multiple uplink transmissions. In some embodiments, the second slot is used for transmitting at least one of PRACH, SRS, PUSCH or PUCCH. The PRACH may be the PRACH in the first PRACH transmission, or the PRACH after the first PRACH transmission.

The start of the second slot may be replaced by the start position of the second slot. The first node may perform transmission of at least one of PRACH, SRS, PUSCH or PUCCH from the start of the second slot.

The first slot and a plurality of PRACH occasions in the first RO set are used to jointly determine the second slot. That is, after the first TAC is received in the first slot, the second slot for uplink transmission by the first node is determined not only based on the first slot or the first uplink timing adjustment, but also based on the plurality of PRACH occasions. In view of this, within the time span of the first PRACH transmission, the plurality of PRACH occasions for transmitting at least one target preamble repetition can be used to determine the uplink slot within the time span, thereby avoiding different transmission timings of multiple target preamble repetitions caused by the first TAC.

In some embodiments, when the first node sends multiple target preamble repetitions on the first RO set, even if the original effective time of the first TAC or the first TAC is received within the time span of the first PRACH transmission, the transmission timings of the multiple target preamble repetitions cannot be affected by the first TAC.

In some embodiments, the second slot, jointly determined by the first slot and the plurality of PRACH occasions, is used for at least one target preamble repetition. That is, the second slot is used for all the target preamble repetitions, thereby ensuring that the transmission timing among the target preamble repetitions is the same.

In some embodiments, a second slot is used for uplink transmission after at least one target preamble repetition. That is, the second slot is not used for any preamble repetition among the target preamble repetitions, nor for any uplink transmission during the transmission among the target preamble repetitions.

As can be seen from FIG. 6, after receiving the first TAC in the first slot, the first node can determine the second slot based on the first slot and the plurality of PRACH occasions in the first RO set, thereby avoiding different transmission timings of at least one target preamble repetition transmitted in the first RO set. The present disclosure reduces the detection interference and improves the random access efficiency.

In FIG. 6, it is mentioned that the first slot and the plurality of PRACH occasions in the first RO set are used to jointly determine the second slot. The first slot and the plurality of PRACH occasions may determine the second slot in multiple ways.

In some embodiments, a first slot may determine a second slot by means of a first effective slot and a plurality of PRACH occasions. In some embodiments, after the first node receives the first TAC in the first slot, the first effective slot may be determined based on the first slot. The positional relationship of the first effective slot and the plurality of PRACH occasions is used to determine the second slot.

The positional relationship between the first effective slot and the plurality of PRACH occasions includes that the first effective slot is within the time-domain range occupied by the plurality of PRACH occasions, and that the first effective slot is outside the time-domain range occupied by the plurality of PRACH occasions.

Since the plurality of PRACH occasions in the first RO set are used to perform the first PRACH transmission, the time-domain range occupied by the plurality of PRACH occasions may also be expressed as the time span in which the first PRACH transmission is located. That is, "the first effective slot is within the time-domain range occupied by the plurality of PRACH occasions in the first RO set" may be replaced by "the first effective slot is within the time span in which the first PRACH transmission is located". Similarly, "the first effective slot is outside the time-domain range occupied by the plurality of PRACH occasions" may alternatively be replaced by "the first effective slot is outside the time span of the first PRACH transmission".

In some embodiments, the time-domain range occupied by the plurality of PRACH occasions is a continuous time domain starting with the first PRACH occasion among the plurality of PRACH occasions and ending with the last PRACH occasion among the plurality of PRACH occasions.

In some embodiments, the first effective slot within the time-domain range occupied by the plurality of PRACH occasions, refers to the first effective slot being later than the start of the first PRACH occasion in the first RO set, and earlier than the end of the last PRACH occasion in the first RO set.

In some embodiments, the first effective slot is not earlier than the start of the first PRACH occasion among the plurality of PRACH occasions, and the first effective slot is not later than the end of the last PRACH occasion among the plurality of PRACH occasions.

In some embodiments, the first effective slot is earlier than the start of the first PRACH occasion among the plurality of PRACH occasions, or the first effective slot is later than the end of the last PRACH occasion among the plurality of PRACH occasions.

In some embodiments, when the first effective slot is within the time-domain range occupied by the plurality of PRACH occasions, the first effective slot is any one or multiple slots within that time-domain range.

In some embodiments, when the first effective slot is within the time-domain range occupied by the plurality of PRACH occasions, the second slot is an uplink slot after the last PRACH occasion among the plurality of PRACH occasions; when the first effective slot is outside the time-domain range occupied by the plurality of PRACH occasions, the second slot is the first effective slot.

In some embodiments, when the first effective slot is not earlier than the start of the first PRACH occasion in the plurality of PRACH occasions, and the first effective slot is not later than the end of the last PRACH occasion in the plurality of PRACH occasions, the second slot is an uplink slot after the last PRACH occasion of the plurality of PRACH occasions.

In some embodiments, the second slot is after the last PRACH occasion of the plurality of PRACH occasions.

In some embodiments, the first slot may determine the second slot directly together with the plurality of PRACH occasions without involving the first effective slot. Exemplarily, the first node may determine the second slot based on a positional relationship between the first slot and the plurality of PRACH occasions in the first RO set.

In some embodiments, after the first node receives the first TAC in the first slot, the second delay may be directly determined according to the plurality of PRACH occasions. The second slot is the sum of the first slot and the second delay.

In some embodiments, when the first slot is between any two PRACH occasions of the plurality of PRACH occasions, the second delay may be determined according to the distance from the first slot to the last PRACH occasion of the plurality of PRACH occasions.

In some embodiments, the second delay may be determined based on the distance between the first slot and the PRACH occasion (the last candidate PRACH occasion) at which the last target preamble repetition in the at least one target preamble repetition is located.

For ease of understanding, the method of determining the second slot by the first slot and the plurality of PRACH occasions will be described below with reference to FIG. 8. The preamble repetition in FIG. 8 may be a target preamble repetition or may not be a target preamble repetition.

Referring to FIG. 8, the first PRACH transmission includes four preamble repetitions, namely preamble repetitions #1 to preamble repetitions #4, respectively. These four preamble repetitions are transmitted over four PRACH occasions, respectively. The first and last PRACH occasions among the four PRACH occasions can define the time-domain range occupied by the plurality of PRACH occasions. As can be seen from FIG. 8, other uplink transmissions are included within this time range.

As can be seen from FIG. 8, the first slot 801 in which the first node receives the first TAC is before the first PRACH occasion. However, the first effective slot 802 determined according to the first delay 810 is between the first PRACH occasion and the second PRACH occasion. That is, the first effective slot 802 is within the time-domain range occupied by the plurality of PRACH occasions. In this scenario, if the first uplink timing adjustment in the first TAC is applied after the first effective slot 802, the preamble repetition #2 differs from the preamble repetition #1 in the uplink timing, which may interfere with the detection by the second node of the plurality of preamble repetitions and reduce random access efficiency. In the embodiments of the present disclosure, the first uplink timing adjustment is applied to the second slot. The second slot 803 in FIG. 8 is an uplink slot after the last PRACH occasion, thereby ensuring that multiple preamble repetitions in the first PRACH transmission have the same uplink timing.

With continued reference to FIG. 8, the second slot 803 may also be determined based on the first slot 801 and the second delay 820, where the second delay 820 is determined based on four PRACH occasions.

The method by which the second slot is determined based on the first slot and the plurality of PRACH occasions is described above with reference to FIG. 8. From this, it can be seen that when the original effective time of the first TAC (i.e., the first effective slot) is within the time span of the first PRACH transmission and is likely to cause different transmission timings for at least two of the plurality of preamble repetitions, the effective time of the first TAC is delayed until after the PRACH occasion corresponding to the last preamble repetition of the first PRACH transmission. By this method, no timing adjustment (including preamble repetition and other uplink transmissions) is performed within the time span of the first PRACH transmission, thereby ensuring the same transmission timing of the plurality of preamble repetitions.

However, in the method shown in FIG. 8, regardless of whether one or more preamble repetitions in the first PRACH transmission are dropped, the actual effective time (second slot) of the first TAC is delayed until after all PRACH occasions occupied by the first PRACH transmission. Because the actual effective time of the first TAC is too late, many uplink transmissions may fall out of synchronization.

As can be seen from the foregoing, in the actual transmission, the first node may give up transmitting one or more preamble repetitions in the first PRACH transmission due to uplink resource collisions or other reasons. That is, the first node only sends one or more target preamble repetitions on the first RO set. Therefore, only the candidate PRACH occasions in the first RO set are used for transmitting preamble repetitions. The PRACH occasions other than the candidate PRACH occasions among the plurality of PRACH occasions do not carry preamble repetition.

In order to minimize uplink out-of-synchronization, the second slot may also be determined based on the first effective slot and at least one candidate PRACH occasion among the plurality of PRACH occasions. When at least one target preamble repetition sent by the first node includes multiple target preamble repetitions, the first RO set includes multiple candidate PRACH occasions. In such a scenario, the second slot may be determined based on the positional relationship of the first effective slot and the multiple candidate PRACH occasions.

In some embodiments, the positional relationship between the first effective slot and the plurality of candidate PRACH occasions includes that the first effective slot is within a time-domain range occupied by the plurality of candidate PRACH occasions and that the first effective slot is outside a time-domain range occupied by the plurality of candidate PRACH occasions.

In some embodiments, the at least one target preamble repetition includes multiple target preamble repetitions; when the first effective slot is within the time-domain range occupied by the multiple candidate PRACH occasions, the second slot is an uplink slot after the last candidate PRACH occasion in multiple candidate PRACH occasions; when the first effective slot is outside the time-domain range occupied by multiple candidate PRACH occasions, the second slot is the first effective slot.

In some embodiments, the time-domain range occupied by the multiple candidate PRACH occasions is a continuous time domain starting with the first PRACH alternative occasion among the multiple candidate PRACH occasions and ending with the last candidate PRACH occasion among the multiple candidate PRACH occasions.

In some embodiments, the first effective slot is within the time-domain range occupied by the plurality of candidate PRACH occasions, meaning that the first effective slot is later than the start of the first candidate PRACH occasion in the first RO set, and earlier than the end of the last candidate PRACH occasion in the first RO set.

In some embodiments, when the first effective slot is not earlier than the start of the first candidate PRACH occasion in the plurality of candidate PRACH occasions and not later than the end of the last candidate PRACH occasion in the plurality of candidate PRACH occasions, the second slot is an uplink slot after the last one of the plurality of candidate PRACH occasions.

In some embodiments, the second slot is after the last one of the plurality of candidate PRACH occasions.

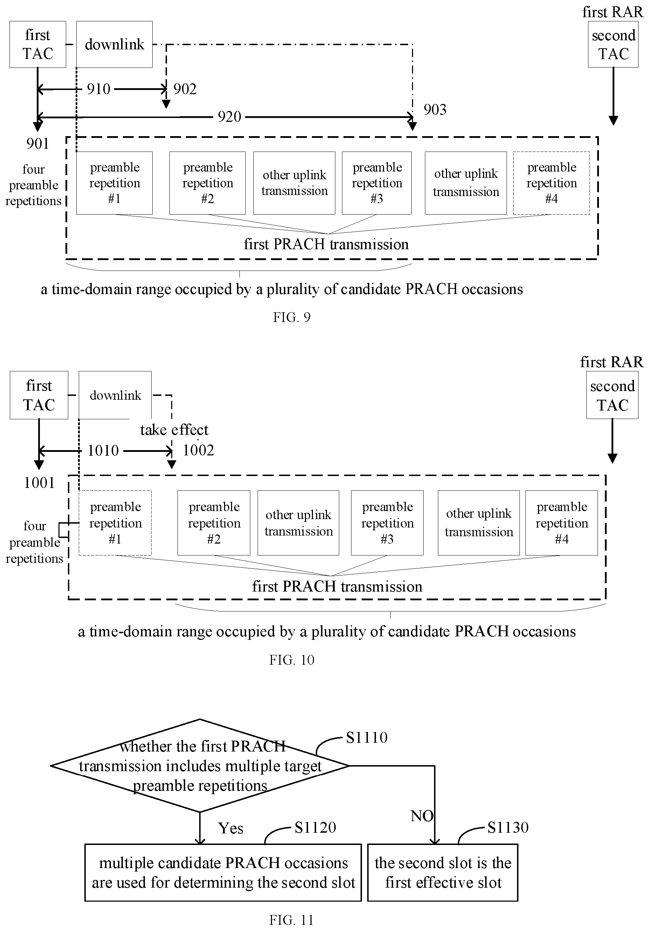

For ease of understanding, the method for determining a second slot based on a first slot and multiple candidate PRACH occasions will be described below with reference to FIGS. 9 and 10. For the sake of simplicity, the explanation already made in FIG. 8 will not be repeated. In FIGS. 9 and 10, preamble repetitions indicated by dashed boxes are those dropped for transmission, and the preamble repetitions indicated by solid boxes are target preamble repetitions.

Referring to FIG. 9, preamble repetition #4 is dropped by the first node, while preamble repetition #1 to preamble repetition #3 respectively occupy three candidate PRACH occasions, from the first candidate PRACH occasion to the third candidate PRACH occasion.

As can be seen from FIG. 9, the first slot 901 in which the first node receives the first TAC is before the first candidate PRACH occasion. However, the first effective slot 902 determined according to the first delay 910 is between the first candidate PRACH occasion and the second candidate PRACH occasion. That is, the first effective slot 902 is within the time-domain range occupied by the plurality of candidate PRACH occasions. In order to ensure that multiple target preamble repetitions have the same uplink timing, the second slot 903 is an uplink slot after the last candidate PRACH occasion.

Referring again to FIG. 9, the second slot 903 may also be determined based on the first slot 901 and the second delay 920, where the second delay 920 is determined based on 3 candidate PRACH occasions.

Referring to FIG. 10, preamble repetition #1 is dropped by the first node, while preamble repetition #2 to the preamble repetition #4 occupy three candidate PRACH occasions, respectively. The first candidate PRACH occasion is occupied by preamble repetition #2, and so on.

As can be seen from FIG. 10, the first slot 901 in which the first node receives the first TAC is before the first candidate PRACH occasion. However, the first effective slot 902 determined according to the first delay 910 is before the first candidate PRACH occasion. That is, the first effective slot 902 is not within the time-domain range occupied by the plurality of candidate PRACH occasions. Even if the first node performs uplink timing adjustment based on the first TAC, the transmission timings of the three target preamble repetitions are the same. Thus, the second slot may be the first effective slot 902.

The method by which the second slot is determined based on the first slot and the plurality of candidate PRACH occasions is described above in combination with FIGS. 9 and 10. As can be seen from FIG. 9, when one or more preamble repetitions in the first PRACH transmission are dropped, the effective time of the first TAC is delayed after the last actually transmitted preamble repetition in the first PRACH transmission. Compared with FIG. 8, the last of other uplink transmissions within the time span of the first PRACH transmission will start applying the first uplink timing adjustment determined by the first TAC, thereby reducing uplink out-of-synchronization.

It can be seen from FIG. 10 that when one or more preamble repetitions in the first PRACH transmission are dropped before the original effective time (first effective slot) of the first TAC, the timing adjustment of the uplink transmission starts from the first effective slot. When the dropped preamble repetitions are before the first effective slot, the effectiveness of the first TAC cannot cause different transmission timings for any two preamble repetitions in the first PRACH transmission, so uplink timing adjustment can be performed in a timely manner to avoid or reduce uplink out-of-synchronization.

Various methods for determining the second slot are described above with reference to FIGS. 8 to 10, respectively. In the above method, the description is mainly directed to the case where the first node transmits multiple target preamble repetitions. When only one target preamble repetition is actually transmitted due to a conflict between the first PRACH transmission and other uplink transmissions, there is no problem that the transmission timings of multiple preamble repetitions are different. In this scenario, if performed according to the method described above, the system resource consumption may be more severe than that of the single PRACH transmission, and the UE access delay may be increased.

To address this problem, the second slot may be determined based on the number of target preamble repetitions included in the first PRACH transmission. That is, the number of target preamble repetitions is used for determining the second slot.

In some embodiments, when the first PRACH transmission includes multiple target preamble repetitions, the plurality of PRACH occasions include multiple candidate PRACH occasions, where the multiple candidate PRACH occasions are respectively used for transmitting multiple target preamble repetitions and are used for determining the second slot; when the first PRACH transmission includes only one target preamble repetition, the second slot is the first effective slot.

In some embodiments, when the first PRACH transmission includes multiple target preamble repetitions, the second slot may be determined based on the methods described above. For example, the second slot may be determined using any one of the methods in FIGS. 8 to 10.

In some embodiments, when the first PRACH transmission includes one target preamble repetition, the second slot may be equal to the first effective slot regardless of whether the target preamble repetition is transmitted before or after the first effective slot.

For ease of understanding, the method for determining the second slot according to the number of target preamble repetitions will be described below with reference to FIG. 11.

Referring to FIG. 11, in S1110, it is determined whether the first PRACH transmission includes multiple target preamble repetitions. If so, operation S1120 is performed; If not (only one target preamble repetition is included), operation S1130 is performed.

In S1120, multiple candidate PRACH occasions are used for determining the second slot.

In S1130, the second slot is the first effective slot.

It can be seen from the above that, in the solution proposed by the embodiments of the present disclosure, if the first effective slot in which the first TAC is received, is within the time span of the first PRACH transmission, the first node can determine the actual effective time of the first TAC based on the number of the actually transmitted preamble repetitions and/or the position of the first effective slot among the plurality of PRACH occasions, thereby avoiding the different transmission timings of the multiple preamble repetitions in the first PRACH transmission caused by the first TAC.

The first node sends at least one target preamble repetition for random access. After transmitting the at least one target preamble repetition, the first node needs to receive the RAR to complete the random access process.

In some embodiments, the first node may receive a first RAR within a first time window. As can be seen from the above, the RAR may represent a random access response, and the first RAR is the first random access response.

The first time window may be a time window for the first node to monitor the corresponding RAR after performing operation S610. The first time window may also be referred to as a RAR time window.

In some embodiments, a last PRACH occasion of the plurality of PRACH occasions is used for determining a first time window. For example, the last PRACH occasion is used for determining the start of the first time window.

The first RAR includes a second TAC. The second TAC is a second timing advance command. Exemplarily, the first RAR may be the RAR bearing TAC2 in FIG. 3 or FIG. 4, and the second TAC may be the TAC2 therein. Illustratively, the first RAR and the second TAC may be as shown in FIGS. 8 to 10.

The second TAC is related to at least one target preamble repetition. Exemplarily, the second TAC is determined according to the transmission timing of the at least one target preamble repetition. Through this method, even if the first TAC is effective in the time span of transmitting the target preamble repetitions, the transmission timings of the at least one target preamble repetition may not be affected. That is, the transmission timings of the at least one target preamble repetition are the same.

In some embodiments, the transmission timing of any one of the at least one target preamble repetition is the same.

In some embodiments, the transmission timings of any two target preamble repetitions in the plurality of target preamble repetitions are the same.

In some embodiments, a transmission timing of the at least one preamble repetition or the transmission timing of any one of the at least one preamble repetition is used to determine the second TAC. Since the transmission timings of at least one target preamble repetition are the same, any one or more target preamble repetitions may be used to determine a second TAC.

In some embodiments, the transmission timing of the at least one preamble repetition or the transmission timing of any one of the at least one preamble repetition is used by a second node to determine the second TAC.

In some embodiments, the second TAC includes a positive integer number of bits.

The first node can transmit the uplink transmissions based on the first TAC and the second TAC. As can be seen from the above, the first TAC is not carried by the RAR, and the second TAC is carried by the RAR.

In some embodiments, the first node transmits a first uplink transmission after receiving the first TAC. The first uplink timing adjustment is applied to the first uplink transmission. That is, the first uplink transmission is transmitted based on the first TAC.

The first uplink transmission may be any one or more of the plurality of uplink transmissions described above. In some embodiments, the first uplink transmission includes at least one of a first PUSCH, a first PUCCH, or an SRS transmission.

In some embodiments, the first PUSCH is a first physical uplink shared channel.

In some embodiments, the first PUSCH is a PUSCH other than the PUSCH scheduled by the RAR.

In some embodiments, the first PUCCH is a first physical uplink control channel.

In some embodiments, the first PUCCH is a PUCCH other than the PUCCH for transmitting acknowledgement information of successful RAR reception.

In some embodiments, the SRS is a sounding reference signal.

In some embodiments, the first uplink transmission is an uplink transmission performed by the first node in the first effective slot or after the first effective slot. Exemplarily, the first uplink transmission is transmitted in the second slot.

In some embodiments, the first node sends a second uplink transmission after receiving the second TAC. The second TAC is used for determining a second uplink timing adjustment. The second uplink timing adjustment is used for the second uplink transmission. That is, the second uplink transmission is transmitted according to the second TAC.

In some embodiments, the second TAC includes a second TA or a second offset value, which is used for the second uplink timing adjustment.

The second uplink transmission includes a second PUSCH or a second PUCCH, where the second PUSCH is a second physical uplink shared channel and the second PUCCH is a second physical uplink control channel.

In some embodiments, the second PUSCH transmission is scheduled by the first RAR. Therefore, the second PUSCH differs from the first PUSCH.

In some embodiments, the second PUSCH is a message 3 sent by the first node according to the first RAR.

In some embodiments, the transmission timing of the second PUSCH is determined according to the second TAC in the first RAR.

In some embodiments, the second PUCCH includes HARQ-ACK information in response to the first RAR.

In some embodiments, the second PUCCH is a PUCCH for transmitting HARQ-ACK for a successfully received RAR (i.e., successRAR). As can be seen from the above, the second PUCCH differs from the first PUCCH.

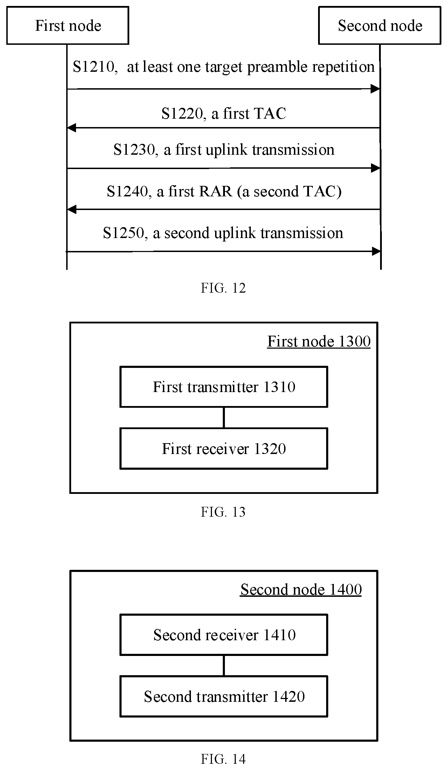

The process of the first node after transmitting at least one target preamble repetition and receiving the first TAC is described above. For ease of understanding, the method by which a first node performs a first PRACH transmission with multiple preamble repetitions in some embodiments of the present disclosure will be described below with reference to FIG. 12. FIG. 12 is also described from the perspective of interaction between the first node and the second node. For simplicity, the terminology explained in FIG. 6 will not be repeated.

Referring to FIG. 12, operations S1210 and S1220 are the same as operations S610 and S620 in FIG. 6 and will not be described in detail.

In S1230, the first node sends a first uplink transmission to the second node. The first uplink transmission is transmitted based on the uplink timing adjustment of the first TAC.

In S1240, the second node sends the first RAR to the first node, where the first RAR includes a second TAC.

In S1250, the first node sends a second uplink transmission to the second node, where the second uplink transmission is transmitted according to the uplink timing adjustment of the second TAC.

It should be understood that the timing sequence of the multiple processes shown in FIG. 12 is merely an example and is not limiting to the embodiments of the present disclosure. As described above, operation S1210 may be performed after operation S1220. In addition, operation S1230 may also be performed after the operation S1240.

The embodiments of the method of the present disclosure are described in detail above with reference to FIGS. 1 to 12, and the embodiments of the device of the present disclosure are described in detail below with reference to FIGS. 13 to 16. It should be understood that the description of the embodiments of the method corresponds to the description of the embodiments of the device; thus, the details not described herein may refer to the embodiments of the previous method.

FIG. 13 is a schematic block diagram of a first node for wireless communication according to some embodiments of the present disclosure. As shown in FIG. 13, the first node 1300 includes a first transmitter 1310 and a first receiver 1320.

The first transmitter 1310 may be configured to transmit at least one target preamble repetition on a first RO set, where the at least one target preamble repetition is at least one preamble repetition in a first PRACH transmission, and the first PRACH transmission includes a plurality of preamble repetitions.

The first receiver 1320 is configured to receive a first TAC on a first slot, where the first TAC is used for determining a first uplink timing adjustment, and the first uplink timing adjustment is applied to a start of a second slot; the first RO set includes a plurality of PRACH occasions, which are used for transmitting the at least one target preamble repetition; and the first slot and the plurality of PRACH occasions are jointly used for determining the second slot.

In some embodiments, the first slot is used for determining a first effective slot; in response to the first effective slot being within a time-domain range occupied by the plurality of PRACH occasions, the second slot is an uplink slot after a last PRACH occasion among the plurality of PRACH occasions; in response to the first effective slot being outside the time-domain range occupied by the plurality of PRACH occasions, the second slot is the first effective slot.

In some embodiments, the first effective slot is a sum of the first slot and a first delay.

In some embodiments, the first slot is used for determining a first effective slot; the number of target preamble repetitions included in the first PRACH transmission is used for determining the second slot.

In some embodiments, in response to the first PRACH transmission including a plurality of target preamble repetitions, the plurality of PRACH occasions include a plurality of candidate PRACH occasions being used for respectively transmitting the plurality of target preamble repetitions, and the plurality of candidate PRACH occasions are used for determining the second slot; and in response to the first PRACH transmission including only one target preamble repetition, the second slot is the first effective slot.

In some embodiments, the first PRACH transmission includes a plurality of target preamble repetitions; in response to the first effective slot being within a time-domain range occupied by the plurality of candidate PRACH occasions, the second slot is an uplink slot after a last candidate PRACH occasion among the plurality of candidate PRACH occasions; in response to the first effective slot being outside the time-domain range occupied by the plurality of candidate PRACH occasions, the second slot is the first effective slot.

In some embodiments, the first receiver 1320 is further configured to receive a first RAR within a first time window, the first RAR including a second TAC, where a last PRACH occasion among the plurality PRACH occasions is used for determining the first time window, and the second TAC is related to at least one target preamble repetition.

In some embodiments, the first transmitter 1310 is further configured to transmit a first uplink transmission, where the first uplink timing adjustment is applied to the first uplink transmission, and the first uplink transmission includes at least one of a first PUSCH transmission, a first PUCCH transmission, or an SRS transmission.

In some embodiments, the first transmitter 1310 is further configured to transmit a second uplink transmission, where the second TAC is used for determining the second uplink timing adjustment; the second uplink timing adjustment is used for the second uplink transmission; the second uplink transmission includes a second PUSCH or a second PUCCH; the second PUSCH transmission is scheduled by the first RAR, the second PUCCH includes HARQ-ACK information, and the HARQ-ACK information is used as a response to the first RAR.

In some embodiments, the first TAC includes a first TA or a first offset value, and the first TA or the first offset value is used for determining the first uplink timing adjustment.

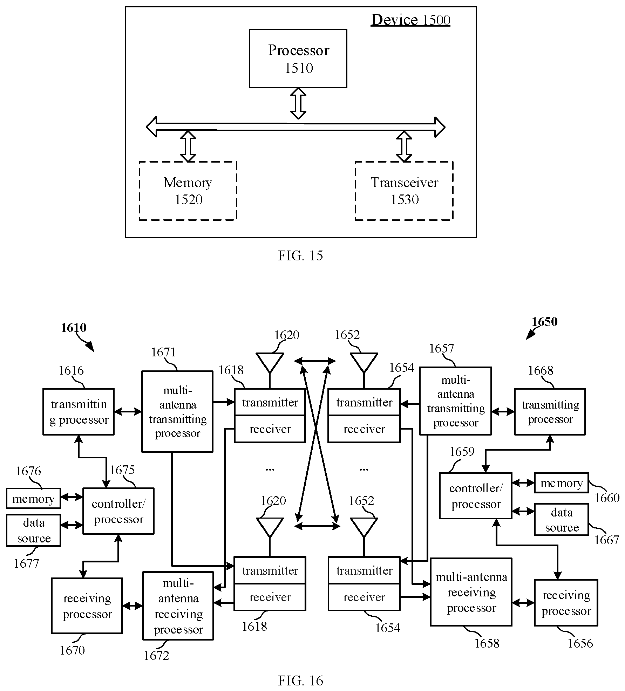

In some embodiments, the first transmitter 1310 and the first receiver 1320 may be a transceiver 1530, and the first node 1300 may also include a processor 1510 and a memory 1520, particularly as shown in FIG. 15.

FIG. 14 is a schematic block diagram of a second node for wireless communication according to some embodiments of the present disclosure. As shown in FIG. 14, the second node 1400 includes a second receiver 1410 and a second transmitter 1420.

The second receiver 1410 is configured to receive at least one target preamble repetition on a first RO set, where the at least one target preamble repetition is at least one preamble repetition in a first PRACH transmission, and the first PRACH transmission includes a plurality of preamble repetitions.

The second transmitter 1420 is configured to transmit a first TAC on a first slot, the first TAC being used for determining a first uplink timing adjustment, and the first uplink timing adjustment being applied to a start of a second slot, where the first RO set includes a plurality of PRACH occasions, the plurality of PRACH occasions being used for transmitting the at least one target preamble repetition, and the first slot and the plurality of PRACH occasions are jointly used for determining the second slot.

In some embodiments, the first slot is used for determining a first effective slot, in response to the first effective slot being within a time-domain range occupied by the plurality of PRACH occasions, the second slot is an uplink slot after a last PRACH occasion among the plurality of PRACH occasions; in response to the first effective slot being outside the time-domain range occupied by the plurality of PRACH occasions, the second slot is the first effective slot.

In some embodiments, the first effective slot is a sum of the first slot and a first delay.

In some embodiments, the first slot is used for determining a first effective slot, and the number of target preamble repetitions included in the first PRACH transmission is used for determining the second slot.

In some embodiments, in response to the first PRACH transmission including a plurality of target preamble repetitions, the plurality of PRACH occasions include a plurality of candidate PRACH occasions, the plurality of candidate PRACH occasions being used for respectively transmitting the plurality of target preamble repetitions, and the plurality of candidate PRACH occasions are used for determining the second slot; and in response to the first PRACH transmission including only one target preamble repetition, the second slot is the first effective slot.

In some embodiments, the first PRACH transmission includes a plurality of target preamble repetitions; in response to the first effective slot being within a time-domain range occupied by the plurality of candidate PRACH occasions, the second slot is an uplink slot after a last candidate PRACH occasion among the plurality of candidate PRACH occasions; in response to the first effective slot being outside the time-domain range occupied by the plurality of candidate PRACH occasions, the second slot is the first effective slot.

In some embodiments, the second transmitter 1420 is further configured to transmit a first RAR within a first time window, where the first RAR includes a second TAC; a last PRACH occasion among the plurality PRACH occasions is used for determining the first time window, and the second TAC is related to the at least one target preamble repetition.

In some embodiments, the second receiver 1410 is further configured to receive a first uplink transmission, the first uplink timing adjustment is applied to the first uplink transmission, and the first uplink transmission includes at least one of a first PUSCH transmission, a first PUCCH transmission, or an SRS transmission.

In some embodiments, the second receiver 1410 is further configured to receive a second uplink transmission, where the second TAC is used for determining the second uplink timing adjustment, the second uplink timing adjustment is used for the second uplink transmission, the second uplink transmission includes a second PUSCH or a second PUCCH, the second PUSCH transmission is scheduled by the first RAR, the second PUCCH includes HARQ-ACK information, and the HARQ-ACK information is used as a response to the first RAR.

In some embodiments, the first TAC includes a first TA or a first offset value, and the first TA or the first offset value is used for determining the first uplink timing adjustment.

In some embodiments, the second receiver 1410 and the second transmitter 1420 may be a transceiver 1530, and the second node 1400 may also include a processor 1510 and a memory 1520, particularly as shown in FIG. 15.

FIG. 15 is a schematic diagram of a device according to some embodiments of the present disclosure. The dashed line in FIG. 15 indicates that the unit or module is optional. The device 1500 may be configured to implement the methods described in the above method embodiments. The device 1500 may be a chip, a terminal device, or a network device.

The device 1500 may include one or more processors 1510. The processor 1510 may support device 1500 to implement the methods described in the foregoing method embodiments. The processor 1510 may be a general purpose processor or a dedicated processor. For example, the processor may be a central processing unit (CPU). Or, the processor may also be other general purpose processor, digital signal processor (DSP), a disclosure specific integrated circuit (ASIC), field programmable gate array (FPGA) or other programmable logic device, discrete gate or transistor logic device, discrete hardware component and so on. The general purpose processor may be a microprocessor or the processor may be any conventional processor or the like.

The device 1500 may also include one or more memories 1520. A program is stored on the memory 1520, which may be executed by the processor 1510, such that the processor 1510 implements the methods described in the foregoing method embodiments. The memory 1520 may be independent of the processor 1510 or may be integrated in the processor 1510.

The device 1500 may also include a transceiver 1530. The processor 1510 may communicate with other devices or chips via the transceiver 1530. For example, the processor 1510 may transmit and receive data with other devices or chips via the transceiver 1530.

FIG. 16 is a schematic diagram of a hardware module of a communication device according to an embodiment of the present disclosure. Specifically, FIG. 16 shows a block diagram of a first communication device 1650 and a second communication device 1610 that communicate with each other in an access network.

The first communication device 1650 includes a controller/processor 1659, a memory 1660, a data source 1667, a transmit processor 1668, a receiving processor 1656, a multi-antenna transmit processor 1657, a multi-antenna receiving processor 1658, a transmitter/receiver 1654 and an antenna 1652.

The second communication device 1610 includes a controller/processor 1675, a memory 1676, a data source 1677, a receiving processor 1670, a transmitting processor 1616, a multi-antenna receiving processor 1672, a multi-antenna transmitting processor 1671, a transmitter/receiver 1618 and antenna 1620.

In the transmission from the second communication device 1610 to the first communication device 1650, at the second communication device 1610, an upper layer data packet from the core network or an upper layer data packet from the data source 1677 is provided to the controller/processor 1675. The core network and the data source 1677 represent all protocol layers above the L2 layer. The controller/processor 1675 implements layer L2 functionality. In the transmission from the second communication device 1610 to the first communication device 1650, the controller/processor 1675 provides header compression, encryption, packet segmentation and reordering, and multiplexing between logic and transport channels, and radio resource allocation to the first communication device 1650 based on various priority metrics. The controller/processor 1675 is also responsible for the retransmission of lost packets, and for signaling to the first communication device 1650. The transmission processor 1616 and the multi-antenna transmission processor 1671 implement various signal processing functions for the layer L1 (i.e., the physical layer). The transmit processor 1616 implements encoding and interleaving to facilitate forward error correction at the second communication device 1610, and mapping of signal clusters based on various modulation schemes (e.g., binary phase shift keying, quadrature phase shift keying, M phase shift keying, M quadrature amplitude modulation). The multi-antenna transmit processor 1671 performs digital spatial precoding on the coded and modulated symbols, including codebook-based precoding and non-codebook-based precoding, and beamforming processing to generate one or more spatial streams. The transmit processor 1616 then maps each spatial stream to subcarriers, multiplexes with a reference signal (e.g., pilot) in the time domain and/or frequency domain, and then uses an inverse fast Fourier transform to generate a physical channel carrying the time-domain multi-carrier symbol stream. The multi-antenna transmit processor 1671 then performs a transmission analog precoding/beamforming operation on the time-domain multi-carrier symbol stream. Each transmitter 1618 converts the baseband multi-carrier symbol stream provided by the multi-antenna transmit processor 1671 into a radio frequency stream, which is then provided to a different antenna 1620.

In the transmission from the second communication device 1610 to the first communication device 1650, at the first communication device 1650, each receiver 1654 receives signals through its respective antenna 1652. Each receiver 1654 recovers the information modulated onto the radio frequency carrier and converts the radio frequency stream into a baseband multi-carrier symbol stream that is provided to the receiving processor 1656. The receiving processor 1656 and the multi-antenna receiving processor 1658 perform various signal processing functions of the L1 layer. The multi-antenna receiving processor 1658 performs a receive analog precoding/beamforming operation on the baseband multi-carrier symbol stream from the receiver 1654. The reception processor 1656 converts the received analog pre-coding/beamforming operation baseband multi-carrier symbol stream from the time domain to the frequency domain using a fast Fourier transform. In the frequency domain, the physical layer data signal and the reference signal are demultiplexed by the receiving processor 1656, where the reference signal is to be used for channel estimation. After multi-antenna detection in the multi-antenna receiving processor 1658, the data signal recovers any spatial stream destined for the first communication device 1650. The symbols on each spatial stream are demodulated and recovered in the receiving processor 1656, and soft decisions are generated. The soft decision is then decoded and de-interleaved by the receiving processor 1656 to recover the upper layer data and control signals transmitted on the physical channel by the second communication device 1610. The upper layer data and control signals are then provided to the controller/processor 1659. The controller/processor 1659 performs L2 layer functions. The controller/processor 1659 may be associated with a memory 1660 that stores program code and data. The memory 1660 may be referred to as a computer readable medium. In the transmission from the second communication device 1610 to the first communication device 1650, the controller/processor 1659 provides demultiplexing between logic and transport channels, packet reassembling, decryption, header decompression, and control signal processing, to recover the upper layer data packets from the second communication device 1610. The upper layer data packet is then provided to all protocol layers above the L2 layer. Various control signals may also be provided to L3 for L3 processing.

In the transmission from the first communication device 1650 to the second communication device 1610, at the first communication device 1650, an upper layer packet is provided to a controller/processor 1659 using a data source 1667. The data source 1667 represents all protocol layers above the L2 layer. Similar to the transmission function at the second communication device 1610 described in the transmission from the second communication device 1610 to the first communication device 1650, the controller/processor 1659 performs header compression, encryption, packet segmentation, and reordering, and multiplexing between logical and transport channels, implementation of L2 layer functions for user planes and control planes. The controller/processor 1659 is also responsible for the retransmission of lost packets, and signaling to the second communication device 1610. The transmission processor 1668 performs modulation mapping, and channel coding processing. The multi-antenna transmission processor 1657 performs digital multi-antenna spatial precoding (including codebook-based precoding and non-codebook-based precoding) and beamforming processing. Subsequently, the transmission processor 1668 modulates the generated spatial stream into a multi-carrier/single-carrier symbol stream which is subjected to analog pre-coding/beamforming operations in the multi-antenna transmit processor 1657, and then provided to the different antennas 1652 via the transmitter 1654. Each transmitter 1654 first converts the baseband symbol stream provided by the multi-antenna transmit processor 1657 into a radio frequency symbol stream, and then provides the stream to the antenna 1652.

In the transmission from the first communication device 1650 to the second communication device 1610, the function at the second communication device 1610 is similar to the receiving function at the first communication device 1650 described in the transmission from the second communication device 1610 to the first communication device 1650. Each receiver 1618 receives a radio frequency signal through its respective antenna 1620, converts the received radio frequency signal into a baseband signal, and provides the baseband signal to the multi-antenna receiving processor 1672 and the receiving processor 1670. The receiving processor 1670 and the multi-antenna receiving processor 1672 jointly implement the L1 layer function. The controller/processor 1675 performs L2 layer functions. The controller/processor 1675 may be associated with a memory 1676 that stores program code and data. The memory 1676 may be referred to as a computer readable medium. In the transmission from the first communication device 1650 to the second communication device 1610, the controller/processor 1675 provides demultiplexing between logic and transport channels, packet reassembling, decryption, header decompression, and control signal processing, to recover the upper layer data packets from the first communication device 1650. The upper layer packets from the controller/processor 1675 may be provided to all protocol layers of the core network or above L2 layer, and may also provide various control signals to the core network or layer L3 for layer L3 processing.

In some embodiments, the first communication device 1650 includes: at least one processor and at least one memory, the at least one memory including computer program code. The at least one memory and the computer program code are configured for use with the at least one processor, the first communication device 1650 is configured to at least: transmit at least one target preamble repetition on a first RO set, where the at least one target preamble repetition is at least one preamble repetition in a first PRACH transmission, and the first PRACH transmission includes a plurality of preamble repetitions; receive a first TAC on a first slot, the first TAC is used for determining a first uplink timing adjustment, and the first uplink timing adjustment is applied to a start of a second slot; where the first RO set includes a plurality of PRACH occasions, the plurality of PRACH occasions are used for transmitting the at least one target preamble repetition, and the first slot and the plurality of PRACH occasions are jointly used for determining the second slot.

In some embodiments, the first communication device 1650 includes a memory storing computer-readable program instructions that, when executed by at least one processor, generate an action, the action including: transmitting at least one target preamble repetition on a first RO set, where the at least one target preamble repetition is at least one preamble repetition in a first PRACH transmission, and the first PRACH transmission includes a plurality of preamble repetitions; receive a first TAC on a first slot, the first TAC is used for determining a first uplink timing adjustment, and the first uplink timing adjustment is applied to a start of a second slot, where the first RO set includes a plurality of PRACH occasions, the plurality of PRACH occasions being used for transmitting the at least one target preamble repetition, and the first slot and the plurality of PRACH occasions are jointly used for determining the second slot.

In some embodiments, the first communication device 1650 corresponds to the first node in the present disclosure.

In some embodiments, the second communication device 1610 corresponds to the second node in the present disclosure.

In some embodiments, the first communication device 1650 is a user device, which can be used as a relay node.

In some embodiments, the first communication device 1650 is a user device supporting V2X, which can be used as a relay node.

In some embodiments, the first communication device 1650 is a user device supporting D2D, and the user device can be used as a relay node.

In some embodiments, the first communication device 1650 is a network control relay NCR.

In some embodiments, the first communication device 1650 is a relay wireless repeater.

In some embodiments, the first communication device 1650 is a relay.

In some embodiments, the second communication device 1610 is a base station.

In some embodiments, the antenna 1652, the transmitter 1654, the multi-antenna transmit processor 1657, the transmit processor 1668, and the controller/processor 1659 are configured to transmit at least one target preamble repetition on a first RO set.

In some embodiments, the antenna 1620, the receiver 1618, the multi-antenna receiving processor 1672, the receiving processor 1670, and the controller/processor 1675 are configured to receive at least one target preamble repetition on a first RO set.

In some embodiments, the antenna 1652, the receiver 1654, the multi-antenna receiving processor 1658, the receiving processor 1656, the controller/processor 1659 are configured to receive a first TAC over a first slot.

In some embodiments, the antenna 1620, the transmitter 1618, the multi-antenna transmit processor 1671, the transmit processor 1616, and the controller/processor 1675 are configured to transmit a first TAC over a first slot.

The embodiments of the present disclosure further provide a computer readable storage medium for storing program. The computer-readable storage medium may be applied to a terminal or a network device provided by the embodiments of the present disclosure, and the program causes the computer to implement the method performed by the terminal or the network device in each embodiment of the present disclosure.

The embodiments of the present disclosure further provide a computer program product. The computer program product includes a program. The computer program product may be applied to a terminal or a network device provided by the embodiments of the present disclosure, and the program causes the computer to implement the method performed by the terminal or the network device in each embodiment of the present disclosure.

The embodiments of the present disclosure further provide a computer program. The computer program may be applied to the terminal or network device provided by the embodiments of the present disclosure, and the computer program causes the computer to implement the method performed by the terminal or network device in each embodiment of the present disclosure.

It should be understood that the terms "system" and "network" in the present disclosure may be used interchangeably. In addition, the terms used in the present disclosure are only configured to explain the specific embodiments of the present disclosure, and are not intended to limit the present disclosure. The terms "first", "second", "third", "fourth", and the like in the specification, claims, and accompanying drawings of the present disclosure are configured to distinguish between different objects, rather than to describe a specific order. In addition, the terms "comprise" and "have" and any variations thereof are intended to cover a non-exclusive inclusion.

In the embodiments of the present disclosure, "indicate" mentioned herein may refer to a direct indication, or may refer to an indirect indication, or may mean that there is an association relationship. For example, A indicating B, may mean that A directly indicating B, for example, B may be obtained by means of A; or may mean that A indirectly indicating B, for example, A indicates C, and B may be obtained by means of C; or may mean that there is an association relationship between A and B.

In the embodiments of the present disclosure, "B corresponding to A" means that B is associated with A, and B may be determined based on A. However, it should also be understood that, determining B based on A does not mean determining B based only on A, but instead B may be determined based on A and/or other information.

In the embodiments of the present disclosure, the term "corresponding" may mean that there is a direct or indirect correspondence between the two, or may mean that there is an association relationship between the two, or may mean that there is a relationship such as indicating and being indicated, or configuring and being configured.

In the embodiments of the present disclosure, "predefined" or "pre-configured" may be implemented by pre-storing corresponding codes, tables, or other forms that may be configured to indicate related information in devices (for example, including the terminal device and the network device), and a specific implementation thereof is not limited in the present disclosure. For example, pre-defined may refer to defined in the protocol.

In the embodiments of the present disclosure, the "protocol" may refer to a standard protocol in the communications field, and may include, for example, an LTE protocol, an NR protocol, and a related protocol applied to a future communications system, which is not limited in the present disclosure.

In the embodiments of the present disclosure, the term "and/or" is merely configured to describe an association relationship between associated objects, indicating that there may be three relationships. For example, A and/or B may indicate that: only A exists, both A and B exist, and only B exists. In addition, the character "/" herein generally indicates an "or" relationship between the associated objects.

In the embodiments of the present disclosure, sequence numbers of the foregoing processes do not mean execution sequences. The execution sequences of the processes should be determined according to functions and internal logic of the processes, and should not be construed as any limitation on the implementation processes of the embodiments of the present disclosure.

In several embodiments provided in the present disclosure, it should be understood that, the disclosed system, device, and method may be implemented in other manners. For example, the described device embodiments are merely examples. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the devices or units may be implemented in electrical, mechanical, or other forms.

The units described as separate parts may or may not be physically separate, and parts displayed as units may or may not be physical units, may be located in one position, or may be distributed on multiple network units. Some or all of the units may be selected according to an actual need to achieve the objectives of the solutions of the embodiments.

In addition, function units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is configured to implement embodiments, the foregoing embodiments may be implemented completely or partially in a form of a computer program product. The computer program product includes one or more computer instructions. When the computer program instructions are loaded and executed on a computer, the procedures or functions according to the embodiments of the present disclosure are completely or partially generated. The computer may be a general-purpose computer, a dedicated computer, a computer network, or another programmable device. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital versatile disc (DVD)), a semiconductor medium (for example, a solid-state drive (SSD)), or the like.

It should be understood by those skilled in the art that all or part of the operations of the above-described methods may be instructed by programs to be executed by corresponding hardware. Such programs may be stored in a computer-readable storage medium, e.g., a read-only memory, a hard disk, or an optical disc. Alternatively, all or part of the operations of the above-described embodiments may also be implemented using one or more integrated circuits. Correspondingly, each module unit described in the above embodiments may be implemented in hardware or in the form of a software functional module. The present disclosure is not limited to any particular combination of software and hardware. The first node described in the present disclosure includes, but is not limited to, wireless communication devices such as mobile phones, tablet computers, notebook computers, internet access cards, low-power devices, enhanced machine-type communication (eMTC) devices, narrowband Internet of Things (NB-IoT) devices, in-vehicle communication devices, aircraft, airplanes, unmanned aerial vehicles, and remotely piloted aircraft. The second node described in the present disclosure includes, but is not limited to, wireless communication devices such as mobile phones, tablet computers, notebook computers, internet access cards, low-power devices, eMTC devices, NB-IoT devices, in-vehicle communication devices, aircraft, airplanes, unmanned aerial vehicles, and remotely piloted aircraft. The user equipment, UE or terminal described in the present disclosure includes, but is not limited to, wireless communication devices such as mobile phones, tablet computers, notebook computers, internet access cards, low-power devices, eMTC devices, NB-IoT devices, in-vehicle communication devices, aircraft, airplanes, UAVs, and remotely piloted aircraft. The base station device, base station, or network-side device described in the present disclosure includes, but is not limited to, wireless communication devices such as macro base stations, micro base stations, home base stations, relay base stations, eNBs, gNBs, TRPs, global navigation satellite systems (GNSS), relay satellites, satellite base stations, and aerial base stations.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method in a first node for wireless communication, comprising:
transmitting at least one target preamble repetition on a first random access channel occasion (RO) set, wherein the at least one target preamble repetition is at least one preamble repetition in a first physical random access channel (PRACH) transmission, and the first PRACH transmission comprises a plurality of preamble repetitions; and
receiving a first timing advance command (TAC) on a first slot, wherein the first TAC is used for determining a first uplink timing adjustment, and the first uplink timing adjustment is applied to a start of a second slot;
wherein the first RO set comprises a plurality of PRACH occasions, the plurality of PRACH occasions are used for transmitting the at least one target preamble repetition, and the first slot and the plurality of PRACH occasions are jointly used for determining the second slot.

2. The method according to claim 1, wherein the first slot is used for determining a first effective slot;
in response to the first effective slot being within a time-domain range occupied by the plurality of PRACH occasions, the second slot is an uplink slot after a last PRACH occasion among the plurality of PRACH occasions; and
in response to the first effective slot being outside the time-domain range occupied by the plurality of PRACH occasions, the second slot is the first effective slot.

3. The method according to claim 2, wherein the first effective slot is a sum of the first slot and a first delay.

4. The method according to claim 1, wherein the first slot is used for determining a first effective slot, and a number of target preamble repetitions comprised in the first PRACH transmission is used for determining the second slot.

5. The method according to claim 4, wherein in response to the first PRACH transmission comprising a plurality of target preamble repetitions, the plurality of PRACH occasions comprise a plurality of candidate PRACH occasions, the plurality of candidate PRACH occasions being used for respectively transmitting the plurality of target preamble repetitions, and the plurality of candidate PRACH occasions are used for determining the second slot; and
in response to the first PRACH transmission comprising only one target preamble repetition, the second slot is the first effective slot.

6. The method according to claim 5, wherein the at least one target preamble repetition comprises a plurality of target preamble repetitions;
in response to the first effective slot being within a time-domain range occupied by the plurality of candidate PRACH occasions, the second slot is an uplink slot after a last candidate PRACH occasion among the plurality of candidate PRACH occasions; and
in response to the first effective slot being outside the time-domain range occupied by the plurality of candidate PRACH occasions, the second slot is the first effective slot.

7. The method according to any one of claims 1 to 6, further comprising:
receiving a first random access response (RAR) within a first time window, wherein the first RAR comprises a second TAC,
wherein a last PRACH occasion among the plurality PRACH occasions is used for determining the first time window, and the second TAC is related to the at least one target preamble repetition.

8. The method according to any one of claims 1 to 7, further comprising:
transmitting a first uplink transmission,
wherein the first uplink timing adjustment is applied to the first uplink transmission, and the first uplink transmission comprises at least one of a first physical uplink shared channel (PUSCH) transmission, a first physical uplink control channel (PUCCH) transmission, or a sound reference signal (SRS) transmission.

9. The method according to claim 7 or 8, further comprising:
transmitting a second uplink transmission,
wherein the second TAC is used for determining the second uplink timing adjustment, the second uplink timing adjustment is used for the second uplink transmission, the second uplink transmission comprises a second physical uplink shared channel (PUSCH) or a second physical uplink control channel (PUCCH), the second PUSCH transmission is scheduled by the first RAR, the second PUCCH comprises hybrid automatic repeat request acknowledgement (HARQ-ACK) information, and the HARQ-ACK information is used as a response to the first RAR.

10. The method according to any one of claims 1 to 9, wherein the first TAC comprises a first timing advance (TA) or a first offset value, and the first TA or the first offset value is used for determining the first uplink timing adjustment.

11. A method in a second node for wireless communication, comprising:
receiving at least one target preamble repetition on a first random access channel occasion (RO) set, wherein the at least one target preamble repetition is at least one preamble repetition in a first physical random access channel (PRACH) transmission, and the first PRACH transmission comprises a plurality of preamble repetitions; and
transmitting a first timing advance command (TAC) on a first slot, wherein the first TAC is used for determining a first uplink timing adjustment, and the first uplink timing adjustment is applied to a start of a second slot;
wherein the first RO set comprises a plurality of PRACH occasions, the plurality of PRACH occasions are used for transmitting the at least one target preamble repetition, and the first slot and the plurality of PRACH occasions are jointly used for determining the second slot.

12. The method according to claim 11, wherein the first slot is used for determining a first effective slot;
in response to the first effective slot being within a time-domain range occupied by the plurality of PRACH occasions, the second slot is an uplink slot after a last PRACH occasion among the plurality of PRACH occasions; and
in response to the first effective slot being outside the time-domain range occupied by the plurality of PRACH occasions, the second slot is the first effective slot.

13. The method according to claim 12, wherein the first effective slot is a sum of the first slot and a first delay.

14. The method according to claim 11, wherein the first slot is used for determining a first effective slot, and a number of target preamble repetitions comprised in the first PRACH transmission is used for determining the second slot.

15. The method according to claim 14, wherein in response to the first PRACH transmission comprising a plurality of target preamble repetitions, the plurality of PRACH occasions comprise a plurality of candidate PRACH occasions, the plurality of candidate PRACH occasions being used for respectively transmitting the plurality of target preamble repetitions, and the plurality of candidate PRACH occasions are used for determining the second slot; and
in response to the first PRACH transmission comprising only one target preamble repetition, the second slot is the first effective slot.

16. The method according to claim 15, wherein the at least one target preamble repetition comprises a plurality of target preamble repetitions;
in response to the first effective slot being within a time-domain range occupied by the plurality of candidate PRACH occasions, the second slot is an uplink slot after a last candidate PRACH occasion among the plurality of candidate PRACH occasions; and
in response to the first effective slot being outside the time-domain range occupied by the plurality of candidate PRACH occasions, the second slot is the first effective slot.

17. The method according to any one of claims 11 to 16, further comprising:
transmitting a first random access response (RAR) within a first time window, wherein the first RAR comprises a second TAC,
wherein a last PRACH occasion among the plurality PRACH occasions is used for determining the first time window, and the second TAC is related to the at least one target preamble repetition.

18. The method according to any one of claims 11 to 17, further comprising:
receiving a first uplink transmission,
wherein the first uplink timing adjustment is applied to the first uplink transmission, and the first uplink transmission comprises at least one of a first physical uplink shared channel (PUSCH) transmission, a first physical uplink control channel (PUCCH) transmission, or a sound reference signal (SRS) transmission.

19. The method according to claim 17 or 18, further comprising:
receiving a second uplink transmission,
wherein the second TAC is used for determining the second uplink timing adjustment, the second uplink timing adjustment is used for the second uplink transmission, the second uplink transmission comprises a second physical uplink shared channel (PUSCH) or a second physical uplink control channel (PUCCH), the second PUSCH transmission is scheduled by the first RAR, the second PUCCH comprises hybrid automatic repeat request acknowledgement (HARQ-ACK) information, and the HARQ-ACK information is used as a response to the first RAR.

20. The method according to any one of claims 11 to 19, wherein the first TAC comprises a first timing advance (TA) or a first offset value, and the first TA or the first offset value is used for determining the first uplink timing adjustment.

21. A first node for wireless communication, comprising:
a first transmitter, configured to transmit at least one target preamble repetition on a first random access channel occasion (RO) set, wherein the at least one target preamble repetition is at least one preamble repetition in a first physical random access channel (PRACH) transmission, and the first PRACH transmission comprises a plurality of preamble repetitions; and
a first receiver, configured to receive a first timing advance command (TAC) on a first slot, wherein the first TAC is used for determining a first uplink timing adjustment, and the first uplink timing adjustment is applied to a start of a second slot;
wherein the first RO set comprises a plurality of PRACH occasions, the plurality of PRACH occasions are used for transmitting the at least one target preamble repetition, and the first slot and the plurality of PRACH occasions are jointly used for determining the second slot.

22. The first node according to claim 21, wherein the first slot is used for determining a first effective slot;
in response to the first effective slot being within a time-domain range occupied by the plurality of PRACH occasions, the second slot is an uplink slot after a last PRACH occasion among the plurality of PRACH occasions; and
in response to the first effective slot being outside the time-domain range occupied by the plurality of PRACH occasions, the second slot is the first effective slot.

23. The first node according to claim 22, wherein the first effective slot is a sum of the first slot and a first delay.

24. The first node according to claim 21, wherein the first slot is used for determining a first effective slot, and a number of target preamble repetitions comprised in the first PRACH transmission is used for determining the second slot.

25. The first node according to claim 24, wherein in response to the first PRACH transmission comprising a plurality of target preamble repetitions, the plurality of PRACH occasions comprise a plurality of candidate PRACH occasions, the plurality of candidate PRACH occasions being used for respectively transmitting the plurality of target preamble repetitions, and the plurality of candidate PRACH occasions are used for determining the second slot; and
in response to the first PRACH transmission comprising only one target preamble repetition, the second slot is the first effective slot.

26. The first node according to claim 25, wherein the at least one target preamble repetition comprises a plurality of target preamble repetitions;
in response to the first effective slot being within a time-domain range occupied by the plurality of candidate PRACH occasions, the second slot is an uplink slot after a last candidate PRACH occasion among the plurality of candidate PRACH occasions; and
in response to the first effective slot being outside the time-domain range occupied by the plurality of candidate PRACH occasions, the second slot is the first effective slot.

27. The first node according to any one of claims 21 to 26, wherein the first receiver is further configured to receive a first random access response (RAR) within a first time window, and the first RAR comprises a second TAC,
wherein a last PRACH occasion among the plurality PRACH occasions is used for determining the first time window, and the second TAC is related to the at least one target preamble repetition.

28. The first node according to any one of claims 21 to 27, wherein the first transmitter is further configured to transmit a first uplink transmission; and
wherein the first uplink timing adjustment is applied to the first uplink transmission, and the first uplink transmission comprises at least one of a first physical uplink shared channel (PUSCH) transmission, a first physical uplink control channel (PUCCH) transmission, or a sound reference signal (SRS) transmission.

29. The first node according to claim 27 or 28, wherein the first transmitter is further configured to transmit a second uplink transmission;
wherein the second TAC is used for determining the second uplink timing adjustment, the second uplink timing adjustment is used for the second uplink transmission, the second uplink transmission comprises a second physical uplink shared channel (PUSCH) or a second physical uplink control channel (PUCCH), the second PUSCH transmission is scheduled by the first RAR, the second PUCCH comprises hybrid automatic repeat request acknowledgement (HARQ-ACK) information, and the HARQ-ACK information is used as a response to the first RAR.

30. The first node according to any one of claims 21 to 29, wherein the first TAC comprises a first timing advance (TA) or a first offset value, and the first TA or the first offset value is used for determining the first uplink timing adjustment.

31. A second node for wireless communication, comprising:
a second receiver, configured to receive at least one target preamble repetition on a first random access channel occasion (RO) set, wherein the at least one target preamble repetition is at least one preamble repetition in a first physical random access channel (PRACH) transmission, and the first PRACH transmission comprises a plurality of preamble repetitions; and
a second transmitter, configured to transmit a first timing advance command (TAC) on a first slot, wherein the first TAC is used for determining a first uplink timing adjustment, and the first uplink timing adjustment is applied to a start of the second slot;
wherein the first RO set comprises a plurality of PRACH occasions, the plurality of PRACH occasions are used for transmitting the at least one target preamble repetition, and the first slot and the plurality of PRACH occasions are jointly used for determining the second slot.

32. The second node according to claim 31, wherein the first slot is used for determining a first effective slot;
in response to the first effective slot being within a time-domain range occupied by the plurality of PRACH occasions, the second slot is an uplink slot after a last PRACH occasion among the plurality of PRACH occasions; and
in response to the first effective slot being outside the time-domain range occupied by the plurality of PRACH occasions, the second slot is the first effective slot.

33. The second node according to claim 32, wherein the first effective slot is a sum of the first slot and a first delay.

34. The second node according to claim 31, wherein the first slot is used for determining a first effective slot, and a number of target preamble repetitions comprised in the first PRACH transmission is used for determining the second slot.

35. The second node according to claim 34, wherein, in response to the first PRACH transmission comprising a plurality of target preamble repetitions, the plurality of PRACH occasions comprise a plurality of candidate PRACH occasions, the plurality of candidate PRACH occasions being used for respectively transmitting the plurality of target preamble repetitions, and the plurality of candidate PRACH occasions are used for determining the second slot; and
in response to the first PRACH transmission comprising only one target preamble repetition, the second slot is the first effective slot.

36. The second node according to claim 35, wherein the at least one target preamble repetition comprises a plurality of target preamble repetitions;
in response to the first effective slot being within a time-domain range occupied by the plurality of candidate PRACH occasions, the second slot is an uplink slot after a last candidate PRACH occasion among the plurality of candidate PRACH occasions; and
in response to the first effective slot being outside the time-domain range occupied by the plurality of candidate PRACH occasions, the second slot is the first effective slot.

37. The second node according to any one of claims 31 to 36, wherein the second transmitter is further configured to transmit a first random access response (RAR) within a first time window, and the first RAR comprises a second TAC; and
wherein a last PRACH occasion among the plurality PRACH occasions is used for determining the first time window, and the second TAC is related to the at least one target preamble repetition.

38. The second node according to any one of claims 31 to 37, wherein the second receiver is further configured to receive the first uplink transmission,
wherein the first uplink timing adjustment is applied to the first uplink transmission, and the first uplink transmission comprises at least one of a first physical uplink shared channel (PUSCH) transmission, a first physical uplink control channel (PUCCH) transmission, or a sound reference signal (SRS) transmission.

39. The second node according to claim 37 or 38, wherein the second receiver is further configured to receive a second uplink transmission; and
wherein the second TAC is used for determining the second uplink timing adjustment, the second uplink timing adjustment is used for the second uplink transmission, the second uplink transmission comprises a second physical uplink shared channel (PUSCH) or a second physical uplink control channel (PUCCH), the second PUSCH transmission is scheduled by the first RAR, the second PUCCH comprises hybrid automatic repeat request acknowledgement (HARQ-ACK) information, and the HARQ-ACK information is used as a response to the first RAR.

40. The second node according to any one of claims 31 to 39, wherein the first TAC comprises a first timing advance (TA) or a first offset value, and the first TA or the first offset value is used for determining the first uplink timing adjustment.

41. A node for wireless communication, comprising: a transceiver, a memory, and a processor, wherein the memory is configured to store one or more programs, and the processor is configured to call the programs in the memory and control the transceiver to receive or send a signal to cause the node to implement the method according to any one of claims 1 to 10 or implement the method according to any one of claims 11 to 20.

42. A device, comprising: a processor configured to call a program from a memory to cause the device to implement the method according to any one of claims 1 to 10 or implement the method according to any one of claims 11 to 20.

43. A chip, comprising: a processor configured to call a program from a memory, so that a device installed with the chip implements the method according to any one of claims 1 to 10 or implement the method according to any one of claims 11 to 20.

44. A computer-readable storage medium, wherein a program is stored thereon, and the program enables a computer to implement the method according to any one of claims 1 to 10 or implement the method according to any one of claims 11 to 20.

45. A computer program product, comprising: a program, wherein the program enables a computer to perform the method according to any one of claims 1 to 10 or implement the method according to any one of claims 11 to 20.

46. A computer program, wherein the computer program enables a computer to implement the method according to any one of claims 1 to 10 or implement the method according to any one of claims 11 to 20.
